# EUROPEAN PATENT APPLICATION

(11) **EP 1 204 112 A2**
(43) Date of publication of application: **08.05.2002**
(21) Application number: 01125383.8
(22) Date of filing: 30.10.2001
(51) Int. Cl.: G11B 20/10, G11B 20/18, G11B 27/36, G11B 19/02

(54) **A reproduction apparatus and method for reproducing digital information recorded on an optical disc**

(30) Priority: 01.11.2000 JP 2000334889
(71) Applicant: MATSUSHITA ELECTRIC INDUSTRIAL CO., LTD., Kadoma-shi, Osaka 571-8501 (JP)
(72) Inventor: Kawashima, Osamu, Tokyo (JP); Iwabuchi, Osamu, Yamato-shi, Kanagawa-ken (JP); Machida, Koichi, Kanagawa-ken (JP)
(74) Representative: Balsters, Robert

(57) **Abstract**

A reproduction apparatus (110) for reproducing digital information recorded on an optical disc, comprises an optical pickup (112) for reading the digital information recorded on the optical disc (111) to have the digital information converted into electric signals, the digital information containing errors appearing when the digital information is read by the optical pickup (112); signal amplifying means (113) for amplifying the electric signals converted from the digital information read by the optical pickup (112); signal processing means (114) for processing the electric signals in one or more times of retry routines to correct the errors outputted as the electric signals from the signal amplifying means (113); a buffer memory (115) for storing the electric signals outputted from the signal processing means (114); signal decoding means (116) for decoding the electric signals stored in the buffer memory (115) and outputted from the buffer memory (115); pickup driving means (117) for driving the optical pickup (112) to move on the optical disc (111), the errors being associated with respective addresses to be targeted by the optical pickup (112) when the optical pickup (112) is moved by the pickup driving means (117); information residue detecting means (119) for detecting an amount of residue digital information remaining in the buffer memory (115); and retry controlling means (118) for controlling the one or more times of retry routines based on the amount of residue digital information detected by the information residue detecting means (119) when the digital information fails to be read out of the optical disc (111).

## Description

### BACKGROUND OF THE INVENTION

### 1. Field of the Invention

The present invention relates to a reproduction apparatus for and a method of reproducing digital information such as video and audio signals recorded on optical discs. The reproduction apparatus includes a DVD-Video player and other disc players. The reproduction method is performed through a retry routine to continue reproducing the digital information such as video and audio signals recorded on optical discs when the digital information cannot be read out of the optical disc operated by the DVD-Video player.

In general, the reproduction apparatus of this kind is designed to reproduce the digital information such as video and audio signals recorded on the optical disc by reading the digital information out of the optical disc. If the optical disc happens to have external damages such as scars, scratches, and fingerprints, the reproduction apparatus cannot normally be operated to reproduce the digital information in the addresses respectively having the external damages. For this reason, the reproduction apparatus is designed to repeat the retry routine by predetermined one more times before skipping the address or addresses to continue reproducing the digital information.

### 2. Description of the Related Art

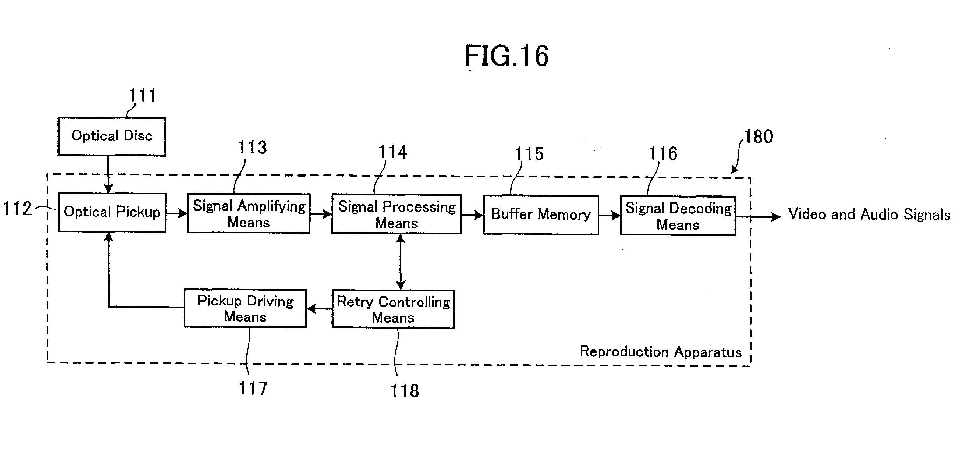

There have so far been proposed a wide variety of disc reproduction apparatus. One typical example of the reproduction apparatus will be described hereinafter with reference to FIG. 16. The reproduction apparatus 180 is shown in FIG. 16 as comprising an optical pickup 112, a signal amplifying means 113, a signal processing means 114, a buffer memory 115, a signal decoding means 116, a pickup driving means 117, and a retry controlling means 118. The optical pickup 112 is designed to read out digital information recorded in an optical disc 111. The signal amplifying means 113 is operative to amplify the digital information read out by the optical pickup 112. The signal processing means 114 is designed to process the electric signals in one or more times of retry routines by the predetermined one or more times to correct the errors outputted as the electric signals from the signal amplifying means 113. Here, the words "one or more times" will be described hereinafter as "times" for simplicity but is of course needless to say that the words include only one time. The word "retry routine" appearing hereinabove is intended to mean a reading operation to repeatedly read the digital information on the optical disc 111 when the optical pickup 112 fails to carry out error correction or read the digital information recorded on an optical disc 111.

The buffer memory 115 functions temporarily as a storing memory of the signal outputted from the signal processing means 114, and the signal decoding means 116 is operative to decode the signal outputted from the buffer memory 115 to video and audio signals. The pickup driving means 117 is designed to drive the optical pickup 112 to move on the optical disc 111. The errors are associated with respective addresses to be targeted by the optical pickup 112 when the optical pickup 112 is moved by the pickup driving means 117. The retry controlling means 118 is operative to control a retry routine according to the signal outputted from the signal processing means 114.

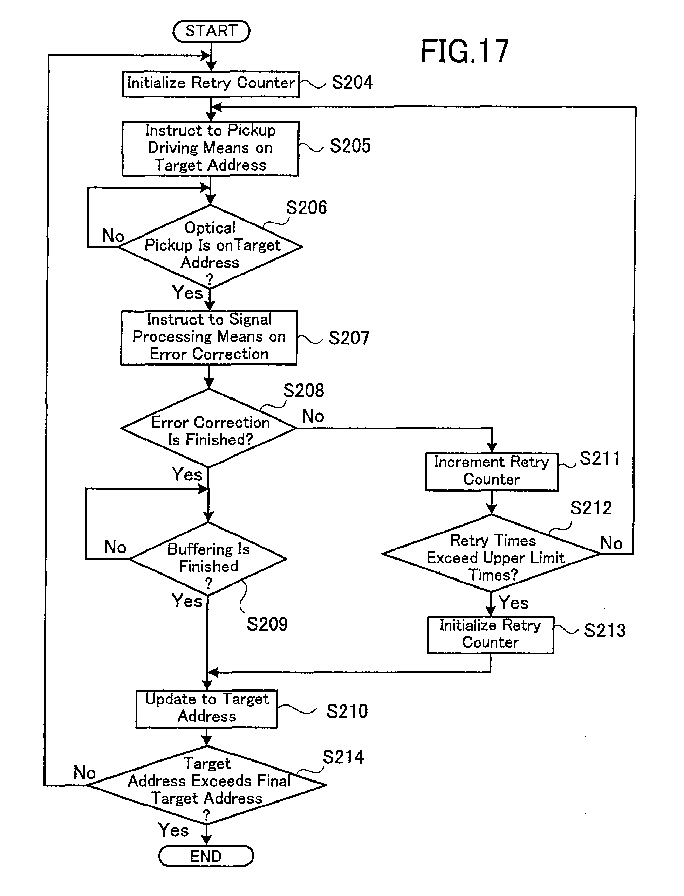

The following description will be directed to the operation of the above conventional reproduction apparatus 180 with reference to FIG. 17 which shows a flowchart of the retry routine controlled by the retry controlling means 118 forming of part of the reproduction apparatus 180.

The retry controlling means 118 firstly initializes the retry counter indicative of the retry times in step S204. The pickup driving means 117 is then instructed by the retry controlling means 118 to have the optical pickup 112 move to the target address on the optical disc 111 to reproduce the digital information in step S205. The retry controlling means 118 is operated to confirm whether or not the pickup driving means 117 is finished with the optical pickup 112 moved to the target address in step S206. When the retry controlling means 118 is operated to confirm that the pickup driving means 117 is finished with the optical pickup 112 moved to the target address in step S206, the signal outputted from the optical pickup 112 is inputted to the signal amplifying means 113 where the signal is amplified. When, on the other hand, the retry controlling means 118 is operated to confirm that the pickup driving means 117 is not finished with the optical pickup 112 moved to the target address in step S206, the pickup driving means 117 is again instructed by the retry controlling means 118 to have the optical pickup 112 move to the target address on the optical disc 111 to reproduce the digital information in step S205. The signal amplified by the signal amplifying means 113 is fed to the signal processing means 114 for performing the error correction process. The signal processing means 114 is then instructed by the retry controlling means 118 to correct errors contained in the digital information on the optical disc 111 in step S207.

The retry controlling means 118 is then operated to confirm whether or not the error correction process is successfully performed by the signal processing means 114 in step S208. When the error correction process is successfully performed by the signal processing means 114 in step S208, the signal processed by the signal processing means 114 is fed to the buffer memory 115 by the signal processing means 114.

When, on the other hand, the error correction process fails to be performed by the signal processing means 114 in step S208, the retry counter is incremented by the retry controlling means 118 in step S211. The retry controlling means 118 is then operated to judge whether or not the retry times exceed the upper limit times through the indication of the retry counter in step S212. If the retry times do not exceed the upper limit times, the retry controlling means 118 has the optical pickup 112 continue retrying to read the digital information at the same target address until the optical pickup 112 obtains the recorded digital information on the optical disc 111 after returning to step S205. If the retry times exceed the upper limit times, the retry controlling means 118 is operated to initialize the retry counter in step S213. The retry controlling means 118 is then operated to confirm whether or not the signal outputted from the signal processing means 114 is completed to be stored in the buffer memory 115 by the signal processing means 114 in step S209. When the signal outputted from the signal processing means 114 succeeds to be stored in the buffer memory 115 by the signal processing means 114 in step S209, the retry controlling means 118 is operated to replace the current target address with a new target address to obtain the next digital information on the optical disc 111 in step S210.

When, on the other hand, the signal outputted from the signal amplifying means 113 fails to be stored in the buffer memory 115 by the signal processing means 114 in step S209, the signal outputted from the signal amplifying means 113 is again fed to the buffer memory 115 and stored in the buffer memory 115 by the signal processing means 114 until the electric signal is completely stored in the buffer memory 115.

The retry controlling means 118 is then operated to judge whether or not the optical pickup 112 finishes reading the digital information at the final target address of the optical disc 111 in step S214. If the optical pickup 112 finishes reading the digital information at the final target address of the optical disc 111 in step S214, the retry controlling means 118 is operated to stop the retry routine. If, on the other hand, the optical pickup 112 has not finished reading the digital information at the final target address of the optical disc 111 in step S214, the process returns to the step S201.

As will be seen from the foregoing description, it is to be understood that the video and audio information recorded on the optical disc 111 is processed with errors corrected and stored in the buffer memory 115 before being decoded by the signal decoding means 116.

The foregoing conventional reproduction apparatus, however, encounters various problems as follows.
1) While the digital information recorded on the optical disc 111 is processed by the signal processing means 114 with errors corrected, the digital information is consecutively stored for reproducing video and audio in the buffer memory 115 by the reason that a decoding rate of the signal decoding means 116 is smaller than a reading rate of the recorded digital information on the optical disc 111. While the digital information recorded on the optical disc 111, however, is processed by the signal processing means 114 with no errors corrected, the buffer memory 115 is eventually reduced to its empty level before the times of retry routines become equal to the upper limit times. The empty level of the buffer memory 115 results in having the digital information being brought into a frozen state in which the video and audio signals remain immediately before being under the frozen state and thus are respectively displayed and outputted at a standstill without any change.
2) Concerning the conventional reproduction apparatus 180, the digital information through the signal decoding means 116 is decoded by each group of pictures unit, hereinafter simply referred to as "GOP unit", if the digital information is recorded by the MPEG standard, i.e., a video compression method planed by Moving Picture Experts Group. The GOP unit is one of the image processing units with the encoded multi-frame pictures. The retry controlling means 118 is operated to replace the current target address with a new target address by the skip feed, moving the optical pickup 112 each physical sector unit or an integral multiple of a physical sector unit. In some cases, then, an amount of the storing digital information in the buffer memory 115 may become smaller than an amount of decoding the digital information from the buffer memory 115, thus, the video signal outputted from the reproduction apparatus has some block-noise, i.e., the rectangular noise on the picture which appears by the insufficient digital information of the buffer memory 115.
3) There are various causes of the failing in the error correction process when the recorded digital information is outputted from the optical disc 111 by the optical pickup 112. If the optical disc 111 has external damages on its surface, the error correcting process cannot be performed though the optical pickup 112 repeats the retry routine with endless repetition for the data destruction. If a transitory noise such as a vibrational disturbance appears in the reproducing process, the retry routine may be helpful to read the recorded digital information. The foregoing conventional reproduction apparatus 180, however, has no procedure to determine the cause of the errors, and designed to fix the upper limit of retry times. The retry routine is then performed until the retry times are equal to an upper limit to the fixed predetermined times though the error correction process has a low probability of success by the external damages on the surface of the optical disc 111. Therefore, the buffer memory 115 is eventually reduced to its empty level before the times of retry routines become equal to the upper limit times. The empty level of the buffer memory 115 results in having the digital information being brought into a frozen state in which the video and audio signals remain immediately before being under the frozen state and thus are respectively displayed and outputted at a standstill without any change.
4) In general, the foregoing conventional reproduction apparatus is designed to rotate the optical disc 111 having inner and outer circumferential tracks different in speed from each other when the optical disc 111 is driven to rotate. For this type of the conventional reproduction apparatus, it is required to maintain at a constant level a reading speed to read the data recorded in the inner and outer circumferential tracks of the optical disc 111. This leads to the fact that the revolution of the electric motor to drive the optical disc 111 is varied in response to the constant reading speed of the optical disc 111. The inner circumferential track of the optical disc 111, on the other hand, has data the same in amount as that of the outer circumferential track of the optical disc 111 irrespective of the diameters different between the inner and outer circumferential tracks of the optical disc 111. Under the condition that the reading speed to read the data recorded in the inner and outer circumferential tracks of the optical disc 111 is maintained at a constant level, it takes a longer time to read the data of the outer circumferential track than that of the inner circumferential track.

For instance, it is assumed that the reading operation of the data on either the inner or outer circumferential track is founded to be failed by the reproduction apparatus. In this case, more time is needed to read the data of the outer circumferential track than that of the inner circumferential track when the reading operation returns to and reads again the failed outer circumferential track. This means that the repeated reading operation of the failed outer circumferential track results in consuming the buffer memory 115 of the reproduction apparatus 180 to its empty level. The reason is due to the fact that the video signal results in the frozen state.

It is therefore an object of the present invention to provide a reproduction apparatus which can prevent the buffer memory from becoming in a frozen state.

It is another object of the present invention to provide a reproduction apparatus which can reduce block noises to a minimum level to enhance the quality of the digital information reproduced by the reproduction apparatus.

It is a further object of the present invention to provide a reproduction apparatus which can change the retry times based on the residue information of the buffer memory to avoid the frozen state of the buffer memory.

It is a still further object of the present invention to provide a reproduction apparatus which can change the retry times based on the positions of the optical pickup to avoid the frozen state of the buffer memory.

### SUMMARY OF THE INVENTION

According to one aspect of the present invention there is provided a reproduction apparatus for reproducing digital information recorded on an optical disc, comprising: an optical pickup for reading the digital information recorded on the optical disc to have the digital information converted into electric signals, the digital information containing errors appearing when the digital information is read by the optical pickup; signal amplifying means for amplifying the electric signals converted from the digital information read by the optical pickup; signal processing means for processing the electric signals in one or more times of retry routines to correct the errors outputted as the electric signals from the signal amplifying means; a buffer memory for storing the electric signals outputted from the signal processing means; signal decoding means for decoding the electric signals stored in the buffer memory and outputted from the buffer memory; pickup driving means for driving the optical pickup to move on the optical disc, the errors being associated with respective addresses to be targeted by the optical pickup when the optical pickup is moved by the pickup driving means; information residue detecting means for detecting an amount of residue digital information remaining in the buffer memory; and retry controlling means for controlling the one or more times of retry routines based on the amount of residue digital information detected by the information residue detecting means when the digital information fails to be read out of the optical disc.

According to another aspect of the present invention there is provided a reproduction apparatus for reproducing digital information recorded on an optical disc, comprising: an optical pickup for reading the digital information recorded on the optical disc to have the digital information converted into electric signals, the digital information containing errors appearing when the digital information is read by the optical pickup; signal amplifying means for amplifying the electric signals converted from the digital information read by the optical pickup; signal processing means for processing the electric signals in one or more times of retry routines to correct the errors outputted as the electric signals from the signal amplifying means; a buffer memory for storing the electric signals outputted from the signal processing means; signal decoding means for decoding the electric signals stored in the buffer memory and outputted from the buffer memory; pickup driving means for driving the optical pickup to move on the optical disc, the errors being associated with respective addresses to be targeted by the optical pickup when the optical pickup is moved by the pickup driving means; the electric signals are decoded by the signal decoding means for a time interval; first time calculating means for calculating the time interval taken by the signal decoding means to discharge the electric signals decoded; and retry controlling means for controlling the one or more times of retry routines based on the time interval calculated by the first time calculating means when the digital information fails to be read out of the optical disc.

According to a further aspect of the present invention there is provided a reproduction apparatus for reproducing digital information recorded on an optical disc, comprising: an optical pickup for reading the digital information recorded on the optical disc to have the digital information converted into electric signals, the digital information containing errors appearing when the digital information is read by the optical pickup; signal amplifying means for amplifying the electric signals converted from the digital information read by the optical pickup; signal processing means for processing the electric signals in one or more times of retry routines to correct the errors outputted as the electric signals from the signal amplifying means; a buffer memory for storing the electric signals outputted from the signal processing means; signal decoding means for decoding the electric signals stored in the buffer memory and outputted from the buffer memory; pickup driving means for driving the optical pickup to move on the optical disc, the errors being associated with respective addresses to be targeted by the optical pickup when the optical pickup is moved by the pickup driving means; external damage detecting means for detecting external damages on the surface of the optical disc; and retry controlling means for controlling the one or more times of retry routines based on the external damages detected by the external damage detecting means; the one or more times of retry routines being repeated by a first retry time at a first address with the external damages and by a second routine time at a second address without the external damages, the first time being smaller than the second time.

According to a still further aspect of the present invention there is provided A reproduction apparatus for reproducing digital information recorded on an optical disc, comprising: an optical pickup is movable in the radial direction of the optical disc to assume radial positions to read the digital information converted into electric signals, the digital information containing errors appearing when the digital information is read by the optical pickup; signal amplifying means for amplifying the electric signals converted from the digital information read by the optical pickup; signal processing means for processing the electric signals in one or more times of retry routines to correct the errors outputted as the electric signals from the signal amplifying means; a buffer memory for storing the electric signals outputted from the signal processing means; signal decoding means for decoding the electric signals stored in the buffer memory and outputted from the buffer memory; pickup driving means for driving the optical pickup to move on the optical disc, the errors being associated with respective addresses to be targeted by the optical pickup when the optical pickup is moved by the pickup driving means; radial position detecting means for detecting the radial positions of the optical pickup; and retry controlling means for controlling the one or more times of retry routines based on the radial position of the optical pickup detected by the radial position detecting means when the digital information fails to be read out of the optical disc.

### BRIEF DESCRIPTION OF THE DRAWINGS

The features and advantages of the reproduction apparatus and method according to the present invention will be more clearly understood from the following description taken in conjunction with the accompanying drawings in which:
FIG. 1 is a block diagram showing a first preferred embodiment of the reproduction apparatus according to the present invention,
FIG. 2 is a flowchart of the retry routine performed by a retry controlling means forming part of the first preferred embodiment according to the present invention,
FIG. 3 is a block diagram showing a second preferred embodiment of the reproduction apparatus according to the present invention,
FIG. 4 is a view illustrated for explaining a Pack of the MPEG standard defined under the Moving Picture Experts Group,
FIG. 5 is a flowchart of the retry routine performed by a retry controlling means forming part of the second preferred embodiment according to the present invention,
FIG. 6 is a block diagram showing a third preferred embodiment of the reproduction apparatus according to the present invention,
FIG. 7 is a table illustrated for explaining the contents of a Data Search Information of the Navigation Pack defined under the DVD-Video format planed by the DVD Forum,
FIG. 8 is a flowchart of the retry routine performed by a retry controlling means forming part of the third preferred embodiment according to the present invention,
FIG. 9 is a table illustrated for explaining the contents of a Video Title Set Time Map of the Video Title Set Information defined under the DVD-Video format planed by the DVD Forum,
FIG. 10 is a flowchart of the retry routine performed by a retry controlling means forming part of a forth preferred embodiment according to the present invention,
FIG. 11 is a block diagram showing a fifth preferred embodiment of the reproduction apparatus according to the present invention,
FIG. 12 is a diagram illustrated for explaining two waveforms for detecting external damages, said waveforms including a detected waveform indicative the signal outputted from a pickup and a comparison result pulse waveform obtained through comparing the detected waveform with a comparator criterion level,
FIG. 13 is a flowchart of the retry routine performed by a retry controlling means forming part of the fifth preferred embodiment according to the present invention,
FIG. 14 is a block diagram showing a sixth preferred embodiment of the reproduction apparatus according to the present invention,
FIG. 15 is a flowchart of the retry routine performed by a retry controlling means forming part of a sixth preferred embodiment according to the present invention,
FIG. 16 is a block diagram showing the conventional reproduction apparatus, and
FIG. 17 is a flowchart of the retry controlling process performed by a retry controlling means forming part of the conventional reproduction apparatus.

### DESCRIPTION OF THE PREFERRED EMBODIMENTS

Preferred embodiments of the reproduction apparatus according to the invention will now be described in detail in accordance with the accompanying drawings.

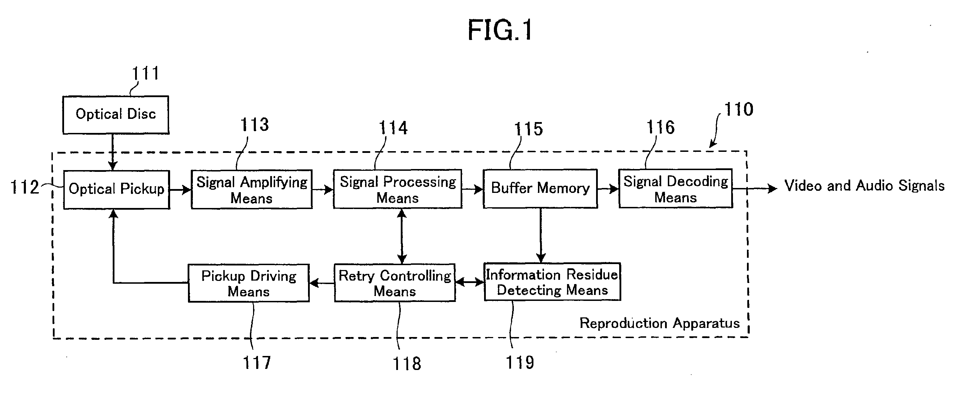

Referring to FIG. 1 of the drawings, there is shown a block diagram of the first preferred embodiment of the reproduction apparatus 110 according to the invention which comprises an optical pickup 112 and signal amplifying means 113. The optical pickup 112 is adapted to read the digital information recorded on the optical disc 111 to have the digital information converted into electric signals. The digital information contains errors appearing when the digital information is read by the optical pickup 112. The signal amplifying means 113 is operative to amplify the electric signals converted from the digital information read by the optical pickup 112.

The reproduction apparatus 110 further comprises signal processing means 114 and a buffer memory 115. The signal processing means 114 is designed to process the electric signals in one or more times of retry routines to correct the errors outputted as the electric signals from the signal amplifying means 113. The buffer memory 115 is operative to store the electric signals outputted from the signal processing means 114. Here, the words "one or more times" will be described hereinafter as "times" for simplicity but is of course needless to say that the words include only one time. The word "retry routine" appearing hereinabove is intended to mean a reading operation to repeatedly read the digital information on the optical disc 111 when the optical pickup 112 fails to carry out error correction or read the digital information recorded on an optical disc 111.

The buffer memory 115 has a plurality of sections including first and second sections respectively having a newest address and an oldest address. The first section assumes a position spaced apart from the second section and in which the buffer memory 115 comprises a write pointer serving to indicate the newest address of the electric signal stored in the buffer memory 115, and a read pointer functioning to indicate the oldest address of the electric signal stored in the buffer memory 115.

The reproduction apparatus 110 further comprises signal decoding means 116 and pickup driving means 117. The signal decoding means 116 is adapted to decode the electric signals stored in the buffer memory 115 and outputted from the buffer memory 115. The pickup driving means 117 is operative to drive the optical pickup 112 to move on the optical disc 111. The errors are associated with respective addresses to be targeted by the optical pickup 112 when the optical pickup 112 is moved by the pickup driving means 117.

The reproduction apparatus 110 further comprises information residue detecting means 119 and retry controlling means 118. The information residue detecting means 119 serves to detect an amount of residue digital information remaining in the buffer memory 115. The retry controlling means 118 is designed to control the times of retry routines based on the amount of residue digital information detected by the information residue detecting means 119 when the digital information fails to be read out of the optical disc 111. The retry controlling means 118 has a retry counter indicative of the retry times and an upper limit times by which the retry routine is repeated.

While the recorded digital information on the optical disc 111 is successfully processed by the signal processing means 114, the digital information is consecutively stored and accumulated in the buffer memory 115 because the decoding rate of the digital information decoded by the signal decoding means 116 is smaller than the reading rate of the digital information read by the optical pickup 112. The retry routine performed by the retry controlling means 118 is, however, required for reading the digital information recorded on the optical disc 111 when the optical pickup 112 fails to read the digital information recorded on the optical disc 111 or the signal processing means 114 fails to carry out error correction. The above retry routines are repeatedly performed by the retry controlling means 118 until the optical pickup 112 can read the digital information recorded on the optical disc 111 or the signal processing means 114 can carry out error correction. At this time, the digital information for reproducing video and audio signals is neither fed to nor stored in the buffer memory 115 though the video and audio signals in the buffer memory 115 are consecutively outputted to the signal decoding means 116. When the buffer memory 115 is eventually reduced to its empty level before the times of retry routines become equal to the upper limit times, the buffer memory 115 has no electric signals for decoding. The empty level of the buffer memory 115 results in having the digital information being brought into a frozen state in which the video and audio signals remain immediately before being under the frozen state and thus are respectively displayed and outputted at a standstill without any change.

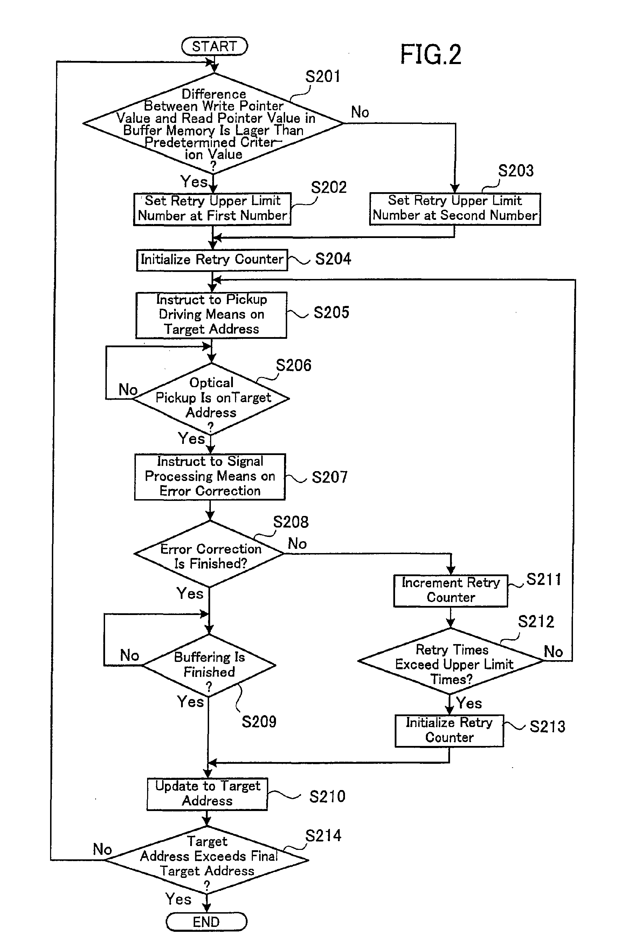

The following description will be directed to the operation of the first embodiment of the reproduction apparatus 110 according to the present invention with reference to FIG. 2 which shows a flowchart of the retry routine controlled by the retry controlling means 118 forming of part of the reproduction apparatus 110.

The retry controlling means 118 is initially operated to compare a predetermined criterion value with a detected value obtained by the information residue detecting means 119 in step S201. In this operation, the amount of the digital information stored in the buffer memory 115 is calculated by the information residue detecting means 119 based on the difference between the write pointer value and the read pointer value in the buffer memory 115. When the difference between the write pointer value and the read pointer value in the buffer memory 115 is lager than the predetermined criterion value, the retry controlling means 118 is operated to have the retry upper limit times set to a first number in step S202. When the difference between the write pointer value and the read pointer value in the buffer memory 115, on the other hand, is smaller than the predetermined criterion value, the retry controlling means 118 is in turn operated to have the retry upper limit times set to a second number, which is smaller than the first number, in step S203.

The retry controlling means 118 then initializes the retry counter indicative of the retry times in step S204. The pickup driving means 117 is then instructed by the retry controlling means 118 to have the optical pickup 112 move to the target address on the optical disc 111 to reproduce the digital information in step S205. The retry controlling means 118 is operated to confirm whether or not the pickup driving means 117 is finished with the optical pickup 112 moved to the target address in step S206. When the retry controlling means 118 is operated to confirm that the pickup driving means 117 is finished with the optical pickup 112 moved to the target address in step S206, the signal outputted from the optical pickup 112 is inputted to the signal amplifying means 113 where the signal is amplified. When, on the other hand, the retry controlling means 118 is operated to confirm that the pickup driving means 117 is not finished with the optical pickup 112 moved to the target address in step S206, the pickup driving means 117 is again instructed by the retry controlling means 118 to have the optical pickup 112 move to the target address on the optical disc 111 to reproduce the digital information in step S205. The signal amplified by the signal amplifying means 113 is fed to the signal processing means 114 for performing the error correction process. The signal processing means 114 is then instructed by the retry controlling means 118 to correct errors contained in the digital information on the optical disc 111 in step S207.

The retry controlling means 118 is then operated to confirm whether or not the error correction process is successfully performed by the signal processing means 114 in step S208. When the error correction process is successfully performed by the signal processing means 114 in step S208, the signal processed by the signal processing means 114 is fed to the buffer memory 115 by the signal processing means 114.

When, on the other hand, the error correction process fails to be performed by the signal processing means 114 in step S208, the retry counter is incremented by the retry controlling means 118 in step S211. The retry controlling means 118 is then operated to judge whether or not the retry times exceed the upper limit times through the indication of the retry counter in step S212. If the retry times do not exceed the upper limit times, the retry controlling means 118 has the optical pickup 112 continue retrying to read the digital information at the same target address until the optical pickup 112 obtains the recorded digital information on the optical disc 111 after returning to step S205. If the retry times exceed the upper limit times, the retry controlling means 118 is operated to initialize the retry counter in step S213. The upper limit times to be changed based on the amount of residue digital information remaining in the buffer memory 115 leads to the fact that the video and audio signals can continuously be decoded without being under the frozen state.

The retry controlling means 118 is then operated to confirm whether or not the signal outputted from the signal processing means 114 is completed to be stored in the buffer memory 115 by the signal processing means 114 in step S209. When the signal outputted from the signal processing means 114 succeeds to be stored in the buffer memory 115 by the signal processing means 114 in step S209, the retry controlling means 118 is operated to replace the current target address with a new target address to obtain the next digital information on the optical disc 111 in step S210.

When, on the other hand, the signal outputted from the signal amplifying means 113 fails to be stored in the buffer memory 115 by the signal processing means 114 in step S209, the signal outputted from the signal amplifying means 113 is again fed to the buffer memory 115 and stored in the buffer memory 115 by the signal processing means 114 until the electric signal is completely stored in the buffer memory 115.

The retry controlling means 118 is then operated to judge whether or not the optical pickup 112 finishes reading the digital information at the final target address of the optical disc 111 in step S214. If the optical pickup 112 finishes reading the digital information at the final target address of the optical disc 111 in step S214, the retry controlling means 118 is operated to stop the retry routine. If, on the other hand, the optical pickup 112 has not finished reading the digital information at the final target address of the optical disc 111 in step S214, the process returns to the step S201.

As will be seen from the foregoing description, the error correction for the video and audio information recorded on the optical disc 111 is performed with the upper limit times to be changed based on the amount of residue digital information remaining in the buffer memory 115 after the video and audio information is stored in the buffer memory 115 by the first embodiment of the reproduction apparatus 110 according to the present invention. This makes it possible to continuously decode video and audio signals without being under the frozen state.

In order to attain the objects of the present invention, the first embodiment of the reproduction apparatus according to the present invention previously mentioned may be replaced by the second embodiment of the reproduction apparatus according to the present invention which will be described hereinafter.

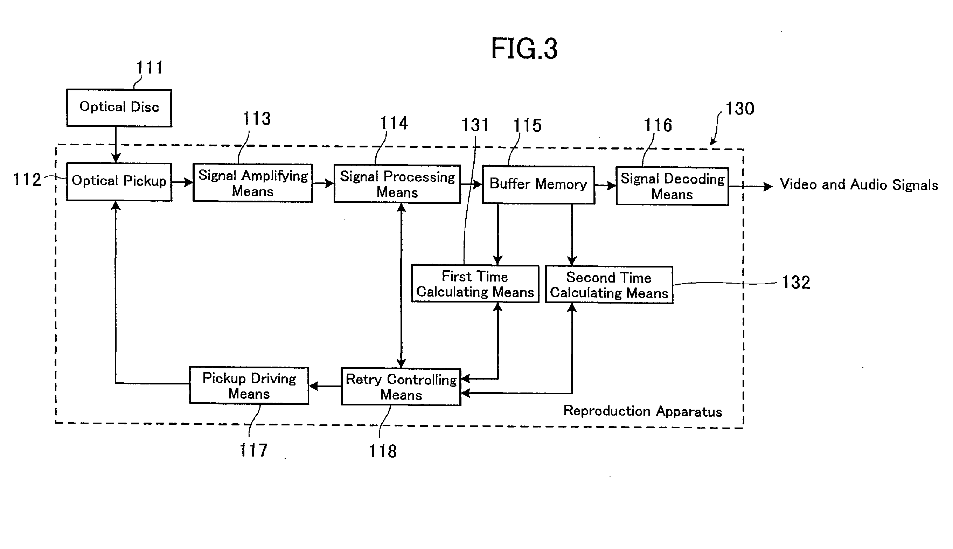

Referring then to FIG. 3 of the drawings, there is shown a block diagram of the second preferred embodiment of the reproduction apparatus 130 according to the invention which comprises an optical pickup 112 and signal amplifying means 113. The optical pickup 112 is adapted to read the digital information recorded on the optical disc 111 to have the digital information converted into electric signals. The digital information contains errors appearing when the digital information is read by the optical pickup 112. The signal amplifying means 113 is operative to amplify the electric signals converted from the digital information read by the optical pickup 112.

The reproduction apparatus 130 further comprises signal processing means 114 and a buffer memory 115. The signal processing means 114 is designed to process the electric signals in times of retry routines to correct the errors outputted as the electric signals from the signal amplifying means 113. The buffer memory 115 is operative to store the electric signals outputted from the signal processing means 114. The buffer memory 115 has a write pointer and a read pointer.

The buffer memory 115 has a plurality of sections including first and second sections respectively having a newest address and an oldest address. The first section assumes a position spaced apart from the second section and in which the buffer memory 115 comprises a write pointer serving to indicate the newest address of the electric signal stored in the buffer memory 115, and a read pointer functioning to indicate the oldest address of the electric signal stored in the buffer memory 115.

The reproduction apparatus 130 further comprises signal decoding means 116 and pickup driving means 117. The signal decoding means 116 is adapted to decode the electric signals stored in the buffer memory 115 and outputted from the buffer memory 115. The pickup driving means 117 is operative to drive the optical pickup 112 to move on the optical disc 111. The errors are associated with respective addresses to be targeted by the optical pickup 112 when the optical pickup 112 is moved by the pickup driving means 117.

The reproduction apparatus 130 according to the present invention has electric signals decoded by the signal decoding means 116 for a time interval. The reproduction apparatus 130 further comprises first time calculating means 131 and retry controlling means 118. The first time calculating means 131 is adapted to calculate the time interval taken by the signal decoding means 116 to discharge the electric signals decoded. The retry controlling means 118 is operative to control the times of retry routines based on the time interval calculated by the first time calculating means 131 when the digital information fails to be read out of the optical disc 111. The retry controlling means 118 has a retry counter indicative of the retry times and a retry times upper limit by which the retry routine is repeated. Here, the word "retry times upper limit" is intended to mean an upper limit on how many times the retry operation is performed by the retry controlling means 118.

The reproduction apparatus 130 further comprises a buffer memory 115, second time calculating means 132, and the retry controlling means 118. The buffer memory 115 has at least two buffer memory sections consisting of an initial buffer memory section having the electric signals firstly stored at an initial time and a final buffer memory section having the electric signals finally stored at a final time. The second time calculating means 132 is adapted to calculate the difference between the initial time and the final time for the electric signals to be stored in the initial and final buffer memory sections. The retry controlling means 118 is adapted to control the times of retry routines based on the difference between the initial time and the final time calculated by the second time calculating means 132.

The reproduction apparatus 130 has the digital information having a plurality of groups of picture unit recorded on the optical disc 111 after being compressed under a specific format each of the groups of picture unit being constituted by a plurality of pictures having a first picture, a last picture, and a plurality of intermediate pictures sequentially ordered between the first picture and the last picture. The reproduction apparatus 130 has the electric signals decoded by the signal decoding means 116 and respectively indicative of the groups of picture unit. The reproduction apparatus 130 further comprises pickup driving means 117 is adapted to have the optical pickup 112 skip the address for each of the groups of picture unit when the digital information fails to be read out of the optical disc 111.

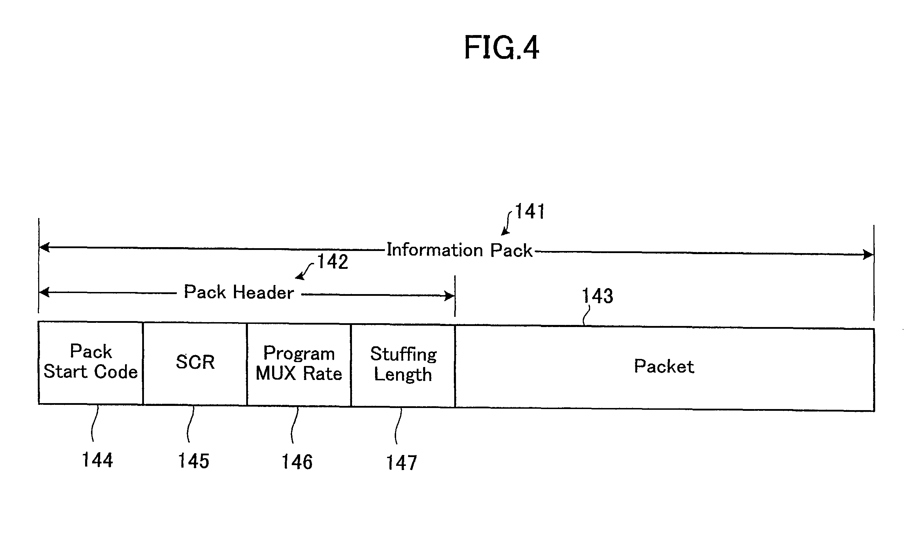

FIG. 4 shows an information pack encoded for example by the MPEG standard, i.e., a video compression method planed by Moving Picture Experts Group, in the second preferred embodiment of the reproduction apparatus 130 according to the present invention. The information pack 141 is shown in FIG. 4 as being composed of a pack header 142 and a packet 143. The pack header 142 consists of a pack start code 144 having an entry address recorded therein, a system clock reference 145 having a criterion time information of reproducing video and audio signals recoded therein, a program multiplex rate 146 having a maximum transfer rate recoded therein, and a stuffing length 147 having a length of a padding packet, not shown, recoded therein to maintain the length of the packet 143 constant. The above system clock reference 145 is hereinafter simply referred to as "SCR 145". The packet 143 contains video and audio data.

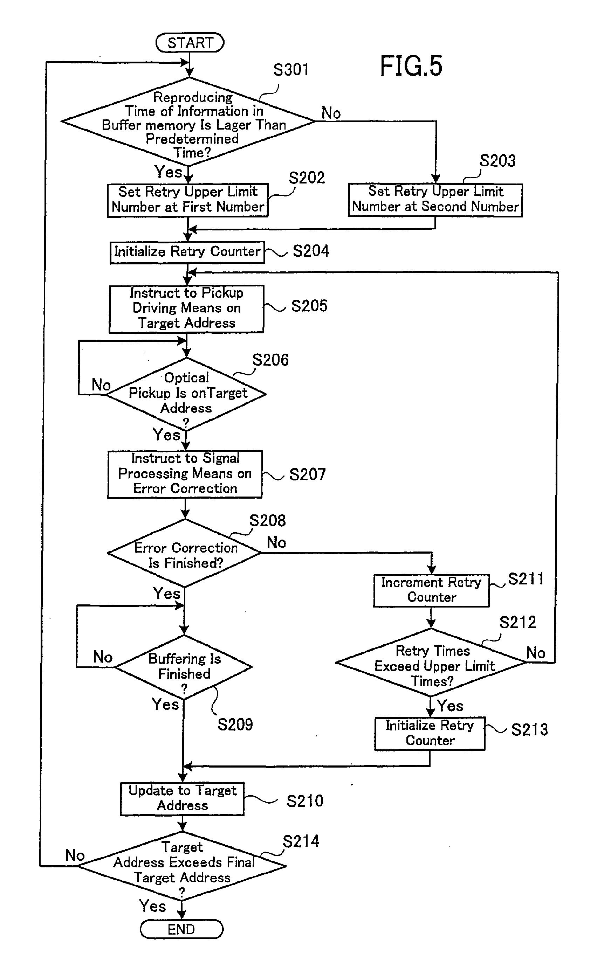

The following description will be directed to the operation of the second embodiment of the reproduction apparatus 130 according to the present invention with reference to FIG. 5 which shows a flowchart of the retry routine controlled by the retry controlling means 118 forming of part of the reproduction apparatus 130.

The retry controlling means 118 is initially operated to compare a predetermined criterion value with a detected value obtained by the first time calculating means 131 in step S301. In this operation, the reproducing time is calculated from converted values of the amount of the storing digital information in the buffer memory 115. If the digital information recorded on the optical disc 111 is encoded by the fixed rate compression, the reproducing time of the digital information can be obtained by the calculation of multiplying the reproducing time by constant. If, on the other hand, the digital information recorded on the optical disc 111 is encoded by the variable rate compression, the reproducing time of the digital information cannot be obtained by the above calculation. The reproducing time of the digital information, therefore, is calculated by the second time calculating means 132 according to the difference value of the SCR between a write pointer value and a read pointer value in the buffer memory 115. When the difference between the write pointer value and the read pointer value in the buffer memory 115 is lager than the predetermined criterion value, the retry controlling means 118 is operated to have a retry times upper limit set to a first number in step S202. When the difference between the write pointer value and the read pointer value in the buffer memory 115, on the other hand, is smaller than the predetermined criterion value, the retry controlling means 118 is in turn operated to have the retry times upper limit set to a second number, which is smaller than the first number, in step S203.

The retry controlling means 118 then initializes the retry counter indicative of the retry times in step S204. The pickup driving means 117 is then instructed by the retry controlling means 118 to have the optical pickup 112 move to the target address on the optical disc 111 to reproduce the digital information in step S205. The retry controlling means 118 is operated to confirm whether or not the pickup driving means 117 is finished with the optical pickup 112 moved to the target address in step S206. When the retry controlling means 118 is operated to confirm that the pickup driving means 117 is finished with the optical pickup 112 moved to the target address in step S206, the signal outputted from the optical pickup 112 is inputted to the signal amplifying means 113 where the signal is amplified. When, on the other hand, the retry controlling means 118 is operated to confirm that the pickup driving means 117 is not finished with the optical pickup 112 moved to the target address in step S206, the pickup driving means 117 is again instructed by the retry controlling means 118 to have the optical pickup 112 move to the target address on the optical disc 111 to reproduce the digital information in step S205. The signal amplified by the signal amplifying means 113 is fed to the signal processing means 114 for performing the error correction process. The signal processing means 114 is then instructed by the retry controlling means 118 to correct errors contained in the digital information on the optical disc 111 in step S207.

The retry controlling means 118 is then operated to confirm whether or not the error correction process is successfully performed by the signal processing means 114 in step S208. When the error correction process is successfully performed by the signal processing means 114 in step S208, the signal processed by the signal processing means 114 is fed to the buffer memory 115 by the signal processing means 114.

When, on the other hand, the error correction process fails to be performed by the signal processing means 114 in step S208, the retry counter is incremented by the retry controlling means 118 in step S211. The retry controlling means 118 is then operated to judge whether or not the retry times exceed the upper limit times through the indication of the retry counter in step S212. If the retry times do not exceed the upper limit times, the retry controlling means 118 has the optical pickup 112 continue retrying to read the digital information at the same target address until the optical pickup 112 obtains the recorded digital information on the optical disc 111 after returning to step S205. If the retry times exceed the upper limit times, the retry controlling means 118 is operated to initialize the retry counter in step S213. The upper limit times to be changed based on the time interval calculated by the first time calculating means 131 or the second time calculating means 132 leads to the fact that the video and audio signals can continuously be decoded without being under the frozen state.

The retry controlling means 118 is then operated to confirm whether or not the signal outputted from the signal processing means 114 is completed to be stored in the buffer memory 115 by the signal processing means 114 in step S209. When the signal outputted from the signal processing means 114 succeeds to be stored in the buffer memory 115 by the signal processing means 114 in step S209, the retry controlling means 118 is operated to replace the current target address with a new target address to obtain the next digital information on the optical disc 111 in step S210.

When, on the other hand, the signal outputted from the signal amplifying means 113 fails to be stored in the buffer memory 115 by the signal processing means 114 in step S209, the signal outputted from the signal amplifying means 113 is again fed to the buffer memory 115 and stored in the buffer memory 115 by the signal processing means 114 until the electric signal is completely stored in the buffer memory 115.

The retry controlling means 118 is then operated to judge whether or not the optical pickup 112 finishes reading the digital information at the final target address of the optical disc 111 in step S214. If the optical pickup 112 finishes reading the digital information at the final target address of the optical disc 111 in step S214, the retry controlling means 118 is operated to stop the retry routine. If, on the other hand, the optical pickup 112 has not finished reading the digital information at the final target address of the optical disc 111 in step S214, the process returns to the step S201.

As will be seen from the foregoing description, the error correction for the video and audio information recorded on the optical disc 111 is performed with the upper limit times to be changed based on the reproducing time of the digital information in the buffer memory 115 after the video and audio information is stored in the buffer memory 115 by the second embodiment of the reproduction apparatus 130 according to the present invention. This makes it possible to continuously decode video and audio signals without being under the frozen state.

In order to attain the objects of the present invention, the first embodiment of the reproduction apparatus according to the present invention previously mentioned may be replaced by the third embodiment of the reproduction apparatus according to the present invention which will be described hereinafter.

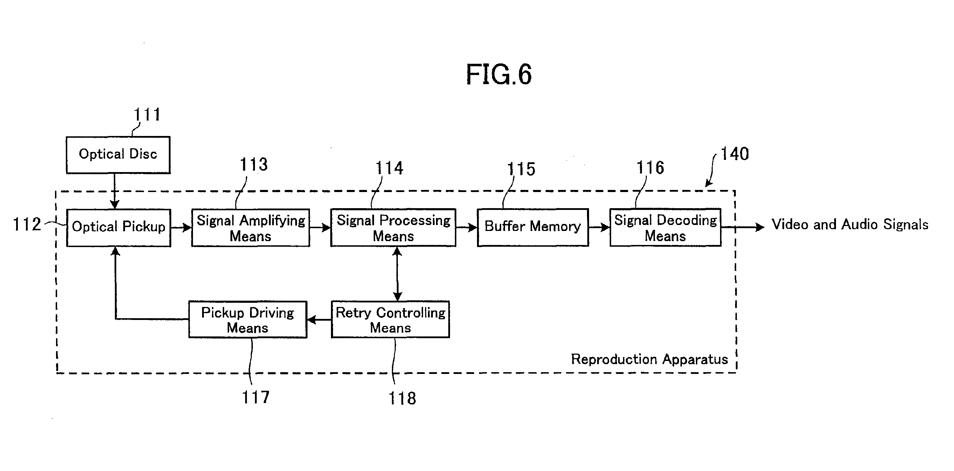

Referring then to FIG. 6 of the drawings, there is shown a block diagram of the third preferred embodiment of the reproduction apparatus 140 according to the invention as comprising an optical pickup 112 and signal amplifying means 113. The optical pickup 112 is adapted to read the digital information recorded on the optical disc 111 to have the digital information converted into electric signals. The digital information has a navigation pack and a plurality of groups of picture unit, hereinafter simply referred to as "GOP unit". The navigation pack includes data search information having first addresses respectively defined for GOP units. The previously mentioned digital information is recorded on the optical disc 111 after being compressed under a specific format. The digital information frequently contains errors appearing when the digital information is read by the optical pickup 112. The signal amplifying means 113 is operative to amplify the electric signals converted from the digital information read by the optical pickup 112.

The reproduction apparatus 140 further comprises signal processing means 114 and a buffer memory 115. The signal processing means 114 is designed to process the electric signals in times of retry routines by the predetermined times to correct the errors outputted as the electric signals from the signal amplifying means 113. The buffer memory 115 is operative to store the electric signals outputted from the signal processing means 114. The buffer memory 115 has a write and a read pointer. The write pointer serves to indicate the newest address of the electric signal stored in the buffer memory 115, while the read pointer functions to indicate the oldest address of the electric signal stored in the buffer memory 115.

The reproduction apparatus 140 further comprises signal decoding means 116, pickup driving means 117, and retry controlling means 118. The signal decoding means 116 is adapted to decode the electric signals stored in the buffer memory 115 and outputted from the buffer memory 115. The pickup driving means 117 is operative to have the optical pickup 112 skip the address for each of the groups of picture unit when the digital information fails to be read out of the optical disc 111. The errors are associated with respective addresses to be targeted by the optical pickup 112 when the optical pickup 112 is moved by the pickup driving means 117. The retry controlling means 118 is designed to control the times of retry routine based on the data search information when the digital information fails to be read out of the optical disc 111. The retry controlling means 118 has a reference counter of the data search information and a retry counter. The reference counter of the data search information has a number referred by the retry controlling means 118 by which the optical pickup moved to the target address according to the first address of the data search information of the navigation pack. The retry counter of the third preferred embodiment, which is the same in construction as the retry counter forming part of the first preferred embodiment, is indicative of the retry times by which the retry routines are repeated.

The reproduction apparatus 140 according to the present invention is operated to use the optical discs having the video data defined and recorded under the DVD-Video format planed by the DVD Forum. This video data includes a navigation pack recorded as a periodic management information. The navigation pack has time sharing management information packed with GOP units including video, audio, and sample picture signals. The GOP unit represents one group of the image processing units, i.e., encoded multi-frame pictures. When the video signal is compressed by the MPEG standard, the video signal for each GOP unit is compressed.

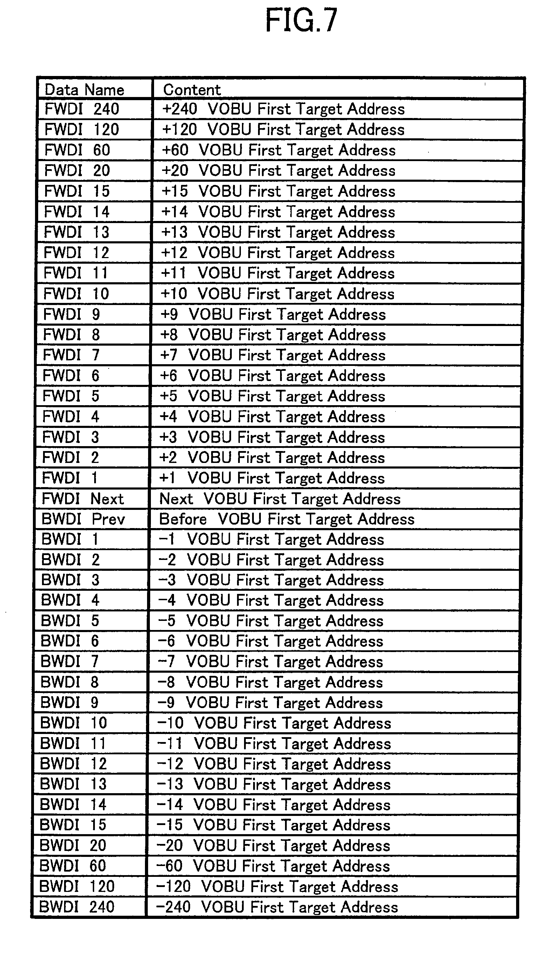

The navigation pack includes data search information, hereinafter simply referred to as "DSI", which has first addresses respectively defined for the GOP unit at the specific reproducing speed. The DSI has controlling information to control the accessing of the optical pickup 112. The list of the DSI is shown in FIG. 7 and contains data names and contents corresponding to the data names.

In FIG. 7, for example, when the recorded information on the optical disc 111 is reproduced by the reproduction apparatus 140 according to the present invention at a high speed ten times the ordinary speed thereof, the pickup driving means 117 has the optical pickup 112 move to the address at the "FWDI 10" showing a first address for the GOP unit at the high speed. The table shown in FIG. 7 essentially has the information addresses at the specific reproducing speed.

The reproduction apparatus 140 according to the invention is operated to have the retry controlling means 118 read the next first address for the GOP unit associated the specific reproducing speed at the predetermined speed through the DSI in the navigation pack. The retry controlling means 118 is then operated to have the pickup driving means 117 drive the optical pickup 112 to move the next first address for the GOP unit.

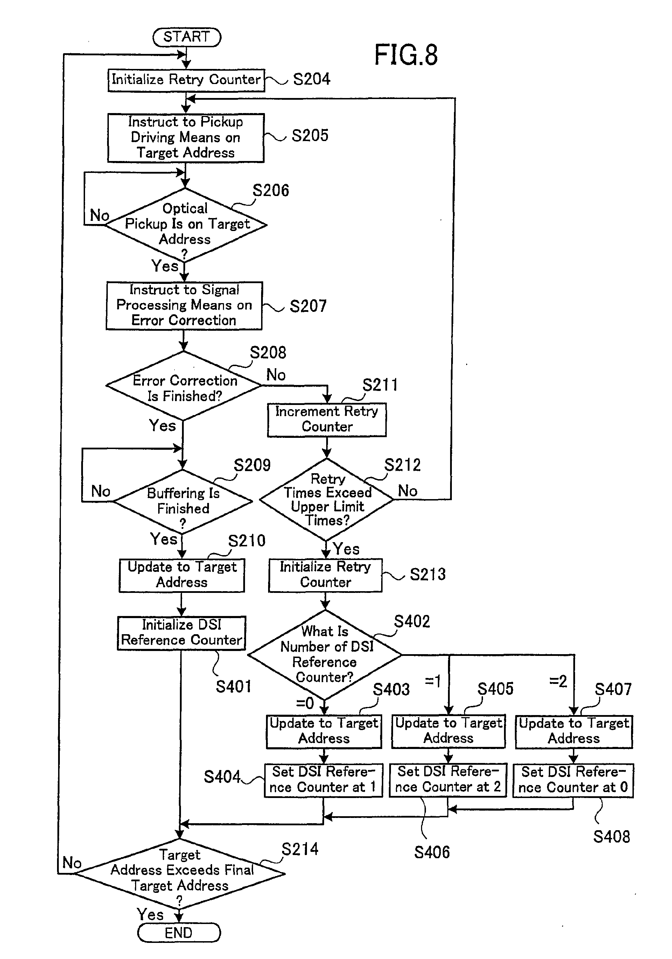

The following description will be directed to the operation of the third embodiment of the reproduction apparatus 140 according to the present invention with reference to FIG. 8 which shows a flowchart of the retry routine by the retry controlling means 118 forming of part of the reproduction apparatus 140.

The retry controlling means 118 then initializes the retry counter indicative of the retry times in step S204. The pickup driving means 117 is then instructed by the retry controlling means 118 to have the optical pickup 112 move to the target address on the optical disc 111 to reproduce the digital information in step S205. The retry controlling means 118 is operated to confirm whether or not the pickup driving means 117 is finished with the optical pickup 112 moved to the target address in step S206. When the retry controlling means 118 is operated to confirm that the pickup driving means 117 is finished with the optical pickup 112 moved to the target address in step S206, the signal outputted from the optical pickup 112 is inputted to the signal amplifying means 113 where the signal is amplified. When, on the other hand, the retry controlling means 118 is operated to confirm that the pickup driving means 117 is not finished with the optical pickup 112 moved to the target address in step S206, the pickup driving means 117 is again instructed by the retry controlling means 118 to have the optical pickup 112 move to the target address on the optical disc 111 to reproduce the digital information in step S205. The signal amplified by the signal amplifying means 113 is fed to the signal processing means 114 for performing the error correction process. The signal processing means 114 is then instructed by the retry controlling means 118 to correct errors contained in the digital information on the optical disc 111 in step S207.

The retry controlling means 118 is then operated to confirm whether or not the error correction process is successfully performed by the signal processing means 114 in step S208. When the error correction process is successfully performed by the signal processing means 114 in step S208, the signal processed by the signal processing means 114 is fed to the buffer memory 115 by the signal processing means 114.

When, on the other hand, the error correction process fails to be performed by the signal processing means 114 in step S208, the retry counter is incremented by the retry controlling means 118 in step S211. The retry controlling means 118 is then operated to judge whether or not the retry times exceed the upper limit times through the indication of the retry counter in step S212. If the retry times do not exceed the upper limit times, the retry controlling means 118 has the optical pickup 112 continue retrying to read the digital information at the same target address until the optical pickup 112 obtains the recorded digital information on the optical disc 111 after returning to step S205. If the retry times exceed the upper limit times, the retry controlling means 118 is operated to initialize the retry counter in step S213. The upper limit times to be changed based on the amount of residue digital information remaining in the buffer memory 115 leads to the fact that the video and audio signals can continuously be decoded without being under the frozen state.

The retry controlling means 118 is then operated to confirm whether or not the signal outputted from the signal processing means 114 is completed to be stored in the buffer memory 115 by the signal processing means 114 in step S209. When the signal outputted from the signal processing means 114 succeeds to be stored in the buffer memory 115 by the signal processing means 114 in step S209, the retry controlling means 118 is operated to replace the current target address with a new target address to obtain the next digital information on the optical disc 111 in step S210. The retry controlling means 118 then initializes the DSI reference counter in step S401.

When, on the other hand, the signal outputted from the signal amplifying means 113 fails to be stored in the buffer memory 115 by the signal processing means 114 in step S209, the signal outputted from the signal amplifying means 113 is again fed to the buffer memory 115 and stored in the buffer memory 115 by the signal processing means 114 until the electric signal is completely stored in the buffer memory 115.

The retry controlling means 118 is then operated to judge whether or not the optical pickup 112 finishes reading the digital information at the final target address of the optical disc 111 in step S214. If the optical pickup 112 finishes reading the digital information at the final target address of the optical disc 111 in step S214, the retry controlling means 118 is operated to stop the retry routine. If, on the other hand, the optical pickup 112 has not finished reading the digital information at the final target address of the optical disc 111 in step S214, the process returns to the step S201.

When the digital information is not obtained by the retry routine within the upper limit times, the retry driving means 117 is operated to have the optical pickup 112 to skip the current target address and move to a next target address. If the digital information on the optical disc 111 is encoded by the MPEG standard, the next address is set the first address defined for the GOP unit by the retry controlling means 118 to minimize the video disturbance.

While the digital information is normally obtained by the optical pickup 112, the reference counter of the DSI is initialized by the retry controlling means 118 after each reading the digital information in step S401. The reproduction apparatus 140 is operated to obtain the first address defined for the GOP unit after referring to the DSI in the navigation pack according to the number of the reference counter of the DSI in step S402. When the number of the reference counter of the DSI is "0" in step S402, the retry controlling means 118 is operated to replace the current target address with an address stored in "FWDI Next" of FIG. 7 in step S403. The address stored in "FWDI Next" shows the first address defined for the GOP unit nearest to the current address. The number of the reference counter of the DSI is then "1" submitted by the retry controlling means 118 in the step S404. When the number of the reference counter of the DSI is "1" in step S402, the retry controlling means 118 is operated to replace the current target address with an address stored in "FWDI 5" of FIG. 7 in step S405. When the number of the reference counter of the DSI is "2" in step S402, the retry controlling means 118 is operated to set the address stored in "FWDI 10" at the target address in step S407. The number of the reference counter of the DSI is then "0" substituted by the retry controlling means 118 in step S408. Thus, even if the digital information is not obtained by the optical pickup 112 through predetermined times of the retry routine, the target address is gradually replaced with the first address defined for the GOP unit by the retry controlling means 118. The pickup driving means 117 is then operated to have the optical pickup 112 move the next address indicated by the retry controlling means 118.

As will be seen from the foregoing description, the error correction for the video and audio information recorded on the optical disc 111 is performed with the upper limit times to be changed based on the first address defined for the GOP unit of the DSL This makes it possible to continuously decode video and audio signals without being under the frozen state.

In order to attain the objects of the present invention, the first embodiment of the reproduction apparatus according to the present invention previously mentioned may be replaced by the fourth embodiment of the reproduction apparatus according to the present invention which will be described hereinafter.

The elements and parts of the fourth embodiment of the reproduction apparatus 150 are entirely the same as those of the third embodiment of the reproduction apparatus 140 according to the present invention as shown in FIG. 6 except for the elements and parts. Therefore, only the elements and parts of the fourth embodiment of the reproduction apparatus 150 different from those of the third embodiment of the reproduction apparatus 140 will be described in detail hereinafter, but the elements and parts of the third embodiment of the reproduction apparatus 140 entirely the same as those of the third embodiment of the reproduction apparatus 140 bear the same reference numerals as those of the third embodiment of the reproduction apparatus 140 in FIG. 6.

The reproduction apparatus 150 according to the invention has the digital information having a video title set information and a plurality of groups of picture unit. The video title set information includes a video title set time map having a first address. The reproduction apparatus 150 further comprises retry controlling means 118. The retry controlling means 118 is designed to control the times of retry routine based on the video title set time map. The retry controlling means 118 has a reference counter of the video title set information. The reference counter of the video title set time map has a number referred by the retry controlling means 118 by which the optical pickup is moved to the target address according to the first address of the video title set time map of the video title set information.

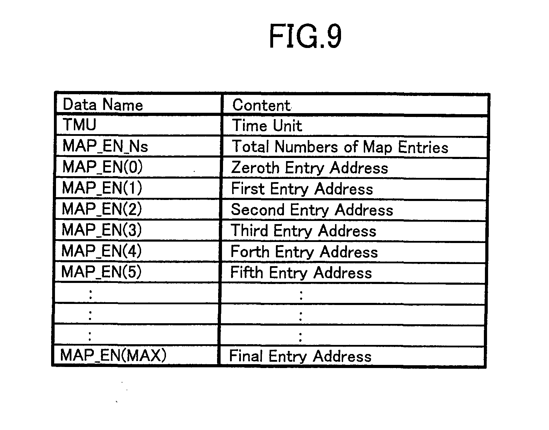

The reproduction apparatus 150 according to the invention is operated to use the optical discs having the video data recorded and defined under the DVD-Video format planed by the DVD Forum. The above video data consists of the video title set information, hereinafter simply referred to as "VTSI". The video title set information includes the video title set time map, hereinafter simply referred to as "VTSTM", with the information of the time search function. The VTSI has controlling information for video reproduction. The VTSTM is a useful data recorded in the VTSI for performing the time search function. The list of the VTSTM is shown FIG. 9 and contains data name and contents corresponding to the data name.

The VTSTM shown in FIG. 9 is referred to the time search function. The VTSTM includes a time unit, appearing with the legend "TMU" in FIG. 9, and showing the time difference between two given entry addresses, a map entry number, appearing with the legend "MAP_EN_Ns" in FIG. 9, and showing a sum of entry numbers, and a plural of map entries, appearing with the legend "MAP_EN" in FIG. 9, recorded in series on the optical disc 111.

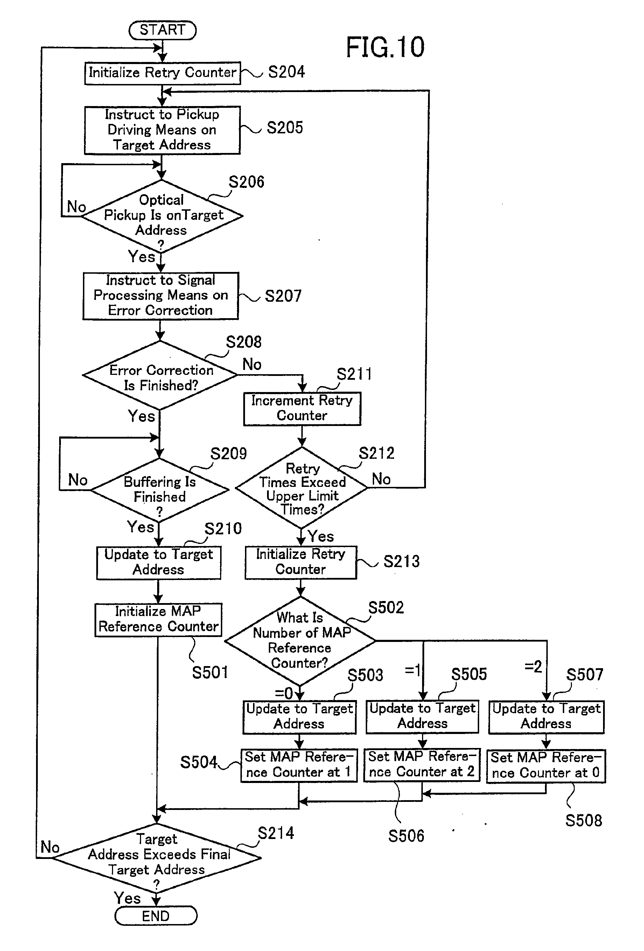

The following description will be directed to the operation of the fourth embodiment of the reproduction apparatus 150 according to the present invention with reference to FIG. 10 which shows a flowchart of the retry routine controlled by the retry controlling means 118 forming of part of the reproduction apparatus 150.

The retry controlling means 118 initializes the retry counter indicative of the retry times in step S204. The pickup driving means 117 is then instructed by the retry controlling means 118 to have the optical pickup 112 move to the target address on the optical disc 111 to reproduce the digital information in step S205. The retry controlling means 118 is operated to confirm whether or not the pickup driving means 117 is finished with the optical pickup 112 moved to the target address in step S206. When the retry controlling means 118 is operated to confirm that the pickup driving means 117 is finished with the optical pickup 112 moved to the target address in step S206, the signal outputted from the optical pickup 112 is inputted to the signal amplifying means 113 where the signal is amplified. When, on the other hand, the retry controlling means 118 is operated to confirm that the pickup driving means 117 is not finished with the optical pickup 112 moved to the target address in step S206, the pickup driving means 117 is again instructed by the retry controlling means 118 to have the optical pickup 112 move to the target address on the optical disc 111 to reproduce the digital information in step S205. The signal amplified by the signal amplifying means 113 is fed to the signal processing means 114 for performing the error correction process. The signal processing means 114 is then instructed by the retry controlling means 118 to correct errors contained in the digital information on the optical disc 111 in step S207.

The retry controlling means 118 is then operated to confirm whether or not the error correction process is successfully performed by the signal processing means 114 in step S208. When the error correction process is successfully performed by the signal processing means 114 in step S208, the signal processed by the signal processing means 114 is fed to the buffer memory 115 by the signal processing means 114.

When, on the other hand, the error correction process fails to be performed by the signal processing means 114 in step S208, the retry counter is incremented by the retry controlling means 118 in step S211. The retry controlling means 118 is then operated to judge whether or not the retry times exceed the upper limit times through the indication of the retry counter in step S212. If the retry times do not exceed the upper limit times, the retry controlling means 118 has the optical pickup 112 continue retrying to read the digital information at the same target address until the optical pickup 112 obtains the recorded digital information on the optical disc 111 after returning to step S205. If the retry times exceed the upper limit times, the retry controlling means 118 is operated to initialize the retry counter in step S213. The upper limit times to be changed based on the amount of residue digital information remaining in the buffer memory 115 leads to the fact that the video and audio signals can continuously be decoded without being under the frozen state.

The retry controlling means 118 is then operated to confirm whether or not the signal outputted from the signal processing means 114 is completed to be stored in the buffer memory 115 by the signal processing means 114 in step S209. When the signal outputted from the signal processing means 114 succeeds to be stored in the buffer memory 115 by the signal processing means 114 in step S209, the retry controlling means 118 is operated to replace the current target address with a new target address to obtain the next digital information on the optical disc 111 in step S210. The retry controlling means 118 then initializes the VTSTM reference counter in step S501.

When, on the other hand, the signal outputted from the signal amplifying means 113 fails to be stored in the buffer memory 115 by the signal processing means 114 in step S209, the signal outputted from the signal amplifying means 113 is again fed to the buffer memory 115 and stored in the buffer memory 115 by the signal processing means 114 until the electric signal is completely stored in the buffer memory 115.

The retry controlling means 118 is then operated to judge whether or not the optical pickup 112 finishes reading the digital information at the final target address of the optical disc 111 in step S214. If the optical pickup 112 finishes reading the digital information at the final target address of the optical disc 111 in step S214, the retry controlling means 118 is operated to stop the retry routine. If, on the other hand, the optical pickup 112 has not finished reading the digital information at the final target address of the optical disc 111 in step S214, the process returns to the step S201.

When the digital information is not obtained by the retry routine within the upper limit times, the retry driving means 117 is operated to have the optical pickup 112 to skip the current target address for moving to a next target address. If the digital information on the optical disc 111 is encoded by the MPEG standard, the next address is set the first address defined for the GOP unit by the retry controlling means 118 for minimizing the video disturbance.

While the digital information is normally obtained by the optical pickup 112, the reference counter of the VTSTM in the VTSI is initialized by the retry controlling means 118 after each reading the digital information in step S501. The reproduction apparatus 150 is then operated to obtain the first address defined for the GOP unit after referring to the VTSTM in the VTSI according to the number of the reference counter of the VTSTM in step S502. When the number of the reference counter of the VTSTM is "0" in step S502, the retry controlling means 118 is operated to replace the current target address with an address stored in "MAP_EN" which shows an address of 1 second after the current address in step S503. The number of the reference counter of the VTSTM is then submitted "1" by the retry controlling means 118 in the step S504. When the number of the reference counter of the VTSTM is "1" in step S502, the retry controlling means 118 is operated to replace the current target address with an address stored in "MAP_EN" which shows an address of 5 seconds after the current address in step S505. The number of the reference counter of the VTSTM is then submitted "2" by the retry controlling means 118 in the step S506. When the number of the reference counter of the VTSTM is "2" in step S502, the retry controlling means 118 is operated to replace the current target address with an address stored in "MAP_EN" which shows an address of 10 seconds after the current address in step S507. The number of the reference counter of the VTSTM is then submitted "0" by the retry controlling means 118 in the step S508. Thus, even if the digital information is not obtained by the optical pickup 112 through the retry routine in the predetermined times, the target address is gradually replaced with the first address defined for the GOP unit by the retry controlling means 118. The pickup driving means 117 is then operated to have the optical pickup 112 move the next address indicated by the retry controlling means 118.

As will be seen from the foregoing description, the error correction for the video and audio information recorded on the optical disc 111 is performed with the upper limit times to be changed based on the first address defined for the GOP unit of the VTSTM. This makes it possible to continuously decode video and audio signals without being under the frozen state.

Furthermore, in order to read out the VTSI before the video and audio signals, the VTSI is recorded in the controlling area which is out of the area of the vide and audio signals area on the optical disc 111. The reading out the VTSI results in the fact that the addresses damaged by the external damages are certainly skipped by the retry controlling means 118 through the first address defined for the GOP unit of the VTSTM of the VTSI.

In order to attain the objects of the present invention, the first embodiment of the reproduction apparatus according to the present invention previously mentioned may be replaced by the fifth embodiment of the reproduction apparatus according to the present invention which will be described hereinafter.

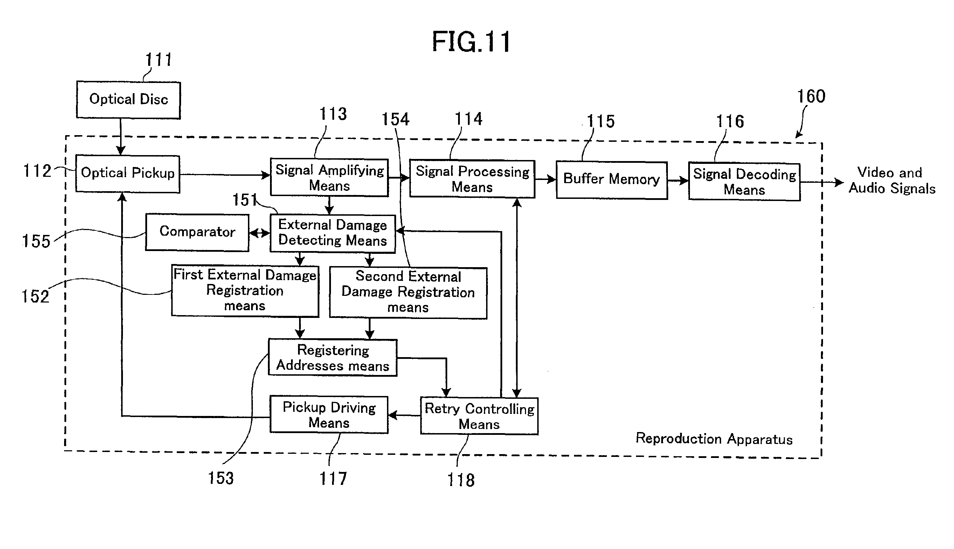

Referring then to FIG. 11 of the drawings, there is shown a block diagram of the fifth preferred embodiment of the reproduction apparatus 160 according to the present invention. The elements and parts of the fifth embodiment of the reproduction apparatus 160 according to the present invention as shown in FIG. 11 are entirely the same as those of the first embodiment of the reproduction apparatus 110 according to the present invention as shown in FIG. 1 except for the elements and parts. Therefore, only the elements and parts of the fifth embodiment of the reproduction apparatus 160 different from those of the first embodiment of the reproduction apparatus 110 will be described in detail hereinafter, but the elements and parts of the fifth embodiment of the reproduction apparatus 160 entirely the same as those of the first embodiment of the reproduction apparatus 110 bear the same reference numerals as those of the first embodiment of the reproduction apparatus 110 in FIG. 1.

The reproduction apparatus 160 further comprises external damage detecting means 151 and retry controlling means 118. The external damage detecting means 151 is designed to detect external damages on the surface of the optical disc 111. The retry controlling means 118 is adapted to control the times of retry routines based on the external damages detected by the external damage detecting means 151. The times of retry routines are repeated by a first retry time at a first address with the external damages and by a second routine time at a second address without the external damages, the first time is smaller than the second time.

The reproduction apparatus 160 further comprises first external damage registration means 152 and a registering addresses means 153. The first external damage registration means 152 is designed to register the addresses with external damages of the optical disc 111. The registering addresses means 153 is adapted to store the addresses with damages are registered by the retry controlling means 118.

The reproduction apparatus 160 further comprises second external damage registration means 154. The second external damage registration means 154 designed to be constituted by a nonvolatile memory adapted to hold the digital information after the reproducing apparatus 160 is out of power.

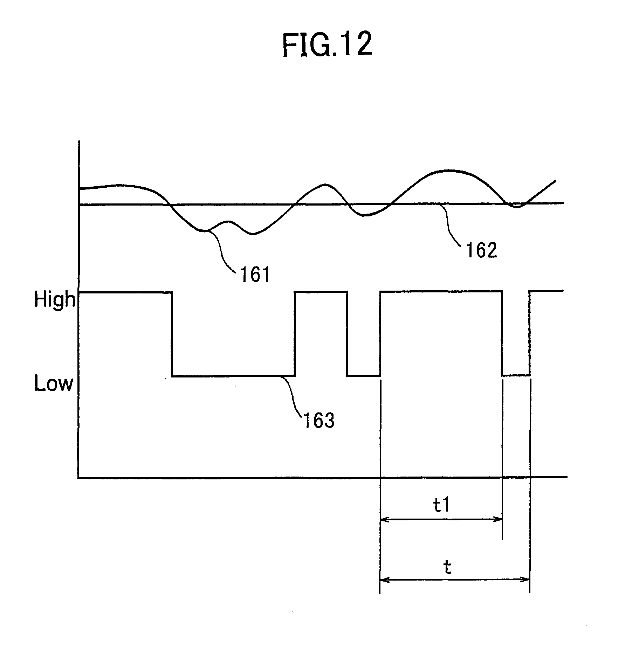

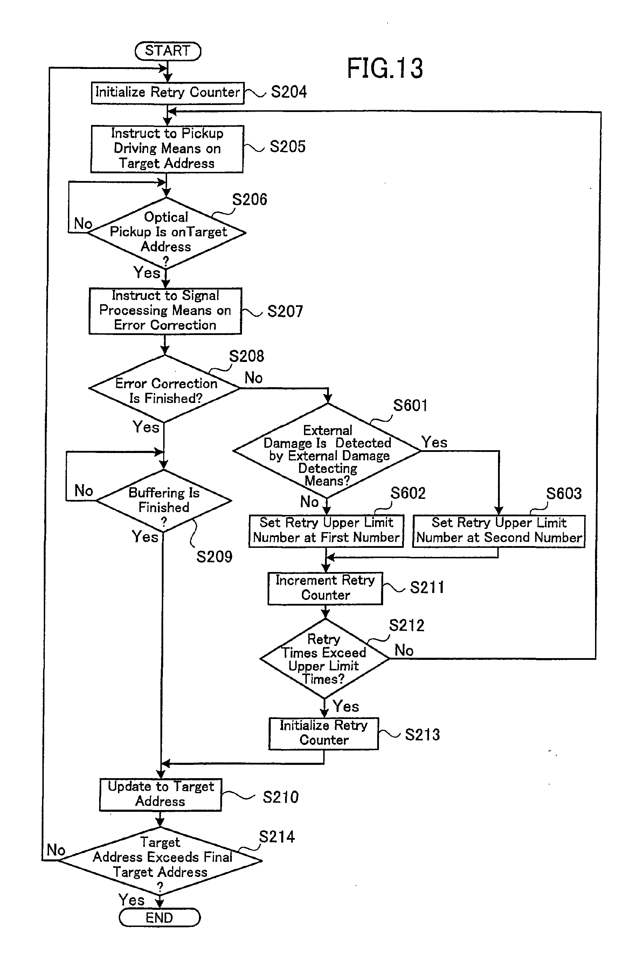

The following description will be directed to the operation of the fifth preferred embodiment of the reproduction apparatus with reference to FIGS. 12 and 13.

FIG. 12 shows a detection waveform 161, a comparator criterion level 162, and a pulse waveform from comparator 155. The detection waveform 161 is obtained by a detector with a predetermined time constant of a detecting electric circuit after applying the reproducing signal to input terminals of the external damage detecting means 151 in FIG. 12. The external damages on the surface of the optical disc 111 result in reducing the outputted level of the optical pickup 112 as well as the direct current outputted level of the detection waveform 161. The reproduction apparatus further comprises a comparator 155 operative to compare the direct current outputted level of the detection waveform 161 with the comparator criterion level 162, and signal processing means 114 designed to judge on the basis of the compared results obtained by the comparator 155 on whether or not the outputted level of the optical pickup 112 is lowered under the influence of the external damages. It will be seen from FIG. 12 that the pulse waveform 163 is obtained by the comparator 155 which is adapted to compare the detection waveform 161 with the comparator criterion level 162. It is a high possibility that the optical disc 111 has external damages on the range corresponding to the low level range of the pulse waveform from the comparator 155 in FIG. 12. In addition, external damage detecting means 151 is operated to judge whether or not the external damages exist at the current target address through a duty ratio shown in FIG. 12 as t1/t determined by calculation from the pulse waveform from comparator 155.

The following description will be directed to the operation of the fifth embodiment of the reproduction apparatus 160 according to the present invention with reference to FIG. 13 which shows a flowchart of the retry routine controlled by the retry controlling means 118 forming of part of the reproduction apparatus 160.

The retry controlling means 118 firstly initializes the retry counter indicative of the retry times in step S204. The pickup driving means 117 is then instructed by the retry controlling means 118 to have the optical pickup 112 move to the target address on the optical disc 111 to reproduce the digital information in step S205. The retry controlling means 118 is operated to confirm whether or not the pickup driving means 117 is finished with the optical pickup 112 moved to the target address in step S206. When the retry controlling means 118 is operated to confirm that the pickup driving means 117 is finished with the optical pickup 112 moved to the target address in step S206, the signal outputted from the optical pickup 112 is inputted to the signal amplifying means 113 where the signal is amplified. When, on the other hand, the retry controlling means 118 is operated to confirm that the pickup driving means 117 is not finished with the optical pickup 112 moved to the target address in step S206, the pickup driving means 117 is again instructed by the retry controlling means 118 to have the optical pickup 112 move to the target address on the optical disc 111 to reproduce the digital information in step S205. The signal amplified by the signal amplifying means 113 is fed to the signal processing means 114 for performing the error correction process. The signal processing means 114 is then instructed by the retry controlling means 118 to correct errors contained in the digital information on the optical disc 111 in step S207.

The retry controlling means 118 is then operated to confirm whether or not the error correction process is successfully performed by the signal processing means 114 in step S208. When the error correction process is successfully performed by the signal processing means 114 in step S208, the signal processed by the signal processing means 114 is fed to the buffer memory 115 by the signal processing means 114.

When, on the other hand, the error correction process fails to be performed by the signal processing means 114 in step S208, the external damage detecting means 151 is then operated to judge whether or not the external damages exist at the current address on the surface of the optical disc 111 in step S601. When the external damages dose not exist at the current address on the surface of the optical disc 111 in step S601, the retry controlling means 118 is operated to have a retry upper limit times set to a first number in step S602. When the external damages exist at the current address on the surface of the optical disc 111 in step S601, the retry controlling means 118 is in turn operated to have the retry upper limit times set to a second number, which is smaller than the first number, in step S603. The retry counter is then incremented by the retry controlling means 118 in step S211. The retry controlling means 118 is then operated to judge whether or not the retry times exceed the upper limit times through the indication of the retry counter in step S212. If the retry times don not exceed the upper limit times, the retry controlling means 118 has the optical pickup 112 continue retrying to read the digital information at the same target address until the optical pickup 112 obtains the recorded digital information on the optical disc 111 after returning to step S205. If the retry times exceed the upper limit times, the retry controlling means 118 is operated to initialize the retry counter in step S213. The upper limit times to be changed based on the external damages at the current address on the optical disc 111 leads to the fact that the video and audio signals can continuously be decoded without being under the frozen state.

As will be seen from the foregoing description, the error correction for the video and audio information recorded on the optical disc 111 is performed with the upper limit times to be changed based on the external damages at the current address on the optical disc 111 by the first embodiment of the reproduction apparatus 110 according to the present invention. This makes it possible to continuously decode video and audio signals without being under the frozen state.

Furthermore, if the address damaged by the external damages is registered in the registering addresses means 153 by the first external damage registration means 152, the upper limit times of retry routine can be changed before the reproducing the video and audio signals. Using the second external damage registration means 154 designed to be constituted by a nonvolatile memory makes it possible to change the upper limit times of retry routine after the reproducing apparatus 160 is once out of power.

In order to attain the objects of the present invention, the first embodiment of the reproduction apparatus according to the present invention previously mentioned may be replaced by the sixth embodiment of the reproduction apparatus according to the present invention which will be described hereinafter.

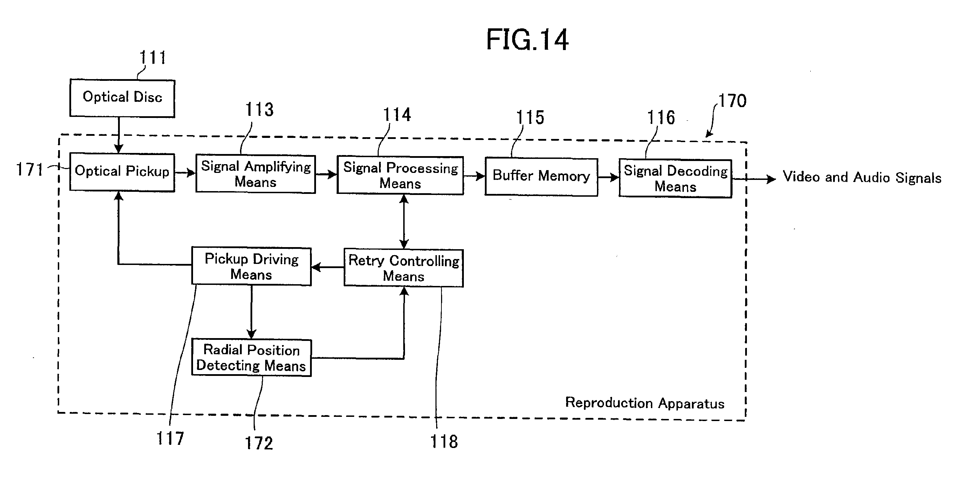

Referring then to FIG. 14 of the drawings, there is shown a block diagram of the sixth preferred embodiment of the reproduction apparatus 170 according to the present invention which comprises an optical pickup 112 and signal amplifying means 113. The optical pickup 112 is movable in the radial direction of the optical disc 111 to assume radial positions to read the digital information converted into electric signals. The digital information contains errors appearing when the digital information is read by the optical pickup 112. The signal amplifying means 113 is operative to amplify the electric signals converted from the digital information read by the optical pickup 112.

The reproduction apparatus 170 further comprises signal processing means 114 and a buffer memory 115. The signal processing means 114 is designed to process the electric signals in one or more times of retry routines to correct the errors outputted as the electric signals from the signal amplifying means 113.

The buffer memory 115 is operative to store the electric signals outputted from the signal processing means 114.

The reproduction apparatus 170 further comprises signal decoding means 116 and pickup driving means 117. The signal decoding means 116 is adapted to decode the electric signals stored in the buffer memory 115 and outputted from the buffer memory 115. The pickup driving means 117 is operative to drive the optical pickup 112 to move on the optical disc 111. The errors are associated with respective addresses to be targeted by the optical pickup 112 when the optical pickup 112 is moved by the pickup driving means 117.

The reproduction apparatus 170 further comprises radial position detecting means 172 and retry controlling means 118. The radial position detecting means 172 is designed to detect the radial positions of the optical pickup 112. The retry controlling means 118 is adapted to control the times of retry routines based on the radial position of the optical pickup 112 detected by the radial position detecting means 172. The retry controlling means 118 has a retry counter indicative of the retry times and an upper limit times by which the retry routine is repeated.

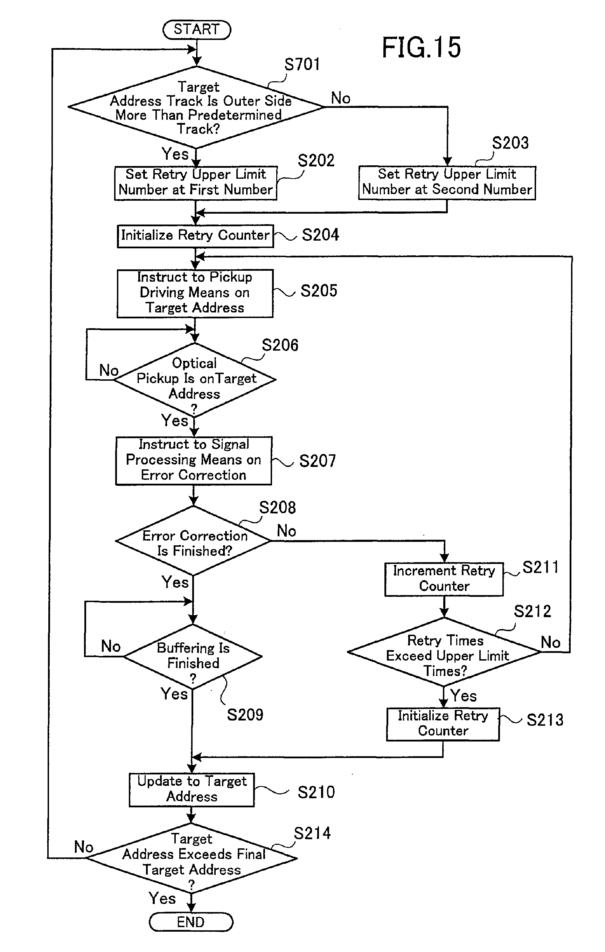

The following description will be directed to the operation of the sixth embodiment of the reproduction apparatus 170 according to the present invention with reference to FIG. 15 which shows a flowchart of the retry routine controlled by the retry controlling means 118 forming of part of the reproduction apparatus 170.

The retry controlling means 118 is operable to perform a comparison of a predetermined criterion circumferential track and a current circumferential track on the optical disc 111 in step S701. When the current circumferential track is inner than the criterion circumferential track, the retry controlling means 118 sets a retry upper limit times to a first number in step S202. When the current circumferential track is outer than the criterion circumferential track, the retry controlling means 118 sets a retry upper limit times to a second number, which is smaller than the first number, in step S203.

The retry controlling means 118 then initializes the retry counter indicative of the retry times in step S204. The pickup driving means 117 is then instructed by the retry controlling means 118 to have the optical pickup 112 move to the target address on the optical disc 111 to reproduce the digital information in step S205. The retry controlling means 118 is operated to confirm whether or not the pickup driving means 117 is finished with the optical pickup 112 moved to the target address in step S206. When the retry controlling means 118 is operated to confirm that the pickup driving means 117 is finished with the optical pickup 112 moved to the target address in step S206, the signal outputted from the optical pickup 112 is inputted to the signal amplifying means 113 where the signal is amplified. When, on the other hand, the retry controlling means 118 is operated to confirm that the pickup driving means 117 is not finished with the optical pickup 112 moved to the target address in step S206, the pickup driving means 117 is again instructed by the retry controlling means 118 to have the optical pickup 112 move to the target address on the optical disc 111 to reproduce the digital information in step S205. The signal amplified by the signal amplifying means 113 is fed to the signal processing means 114 for performing the error correction process. The signal processing means 114 is then instructed by the retry controlling means 118 to correct errors contained in the digital information on the optical disc 111 in step S207.

The retry controlling means 118 is then operated to confirm whether or not the error correction process is successfully performed by the signal processing means 114 in step S208. When the error correction process is successfully performed by the signal processing means 114 in step S208, the signal processed by the signal processing means 114 is fed to the buffer memory 115 by the signal processing means 114.

When, on the other hand, the error correction process fails to be performed by the signal processing means 114 in step S208, the retry counter is incremented by the retry controlling means 118 in step S211. The retry controlling means 118 is then operated to judge whether or not the retry times exceed the upper limit times through the indication of the retry counter in step S212. If the retry times exceed the upper limit times, the retry controlling means 118 has the optical pickup 112 continue retrying to read the digital information at the same target address until the optical pickup 112 obtains the recorded digital information on the optical disc 111 after returning to step S205. If the retry times do not exceed the upper limit times, the retry controlling means 118 is operated to initialize the retry counter in step S213. The upper limit times to be changed based on the radial position of the optical pickup 112 leads to the fact that the video and audio signals can continuously be decoded without being under the frozen state.

The retry controlling means 118 is then operated to confirm whether or not the signal outputted from the signal processing means 114 is completed to be stored in the buffer memory 115 by the signal processing means 114 in step S209. When the signal outputted from the signal processing means 114 succeeds to be stored in the buffer memory 115 by the signal processing means 114 in step S209, the retry controlling means 118 is operated to replace the current target address with a new target address to obtain the next digital information on the optical disc 111 in step S210.

When, on the other hand, the signal outputted from the signal amplifying means 113 fails to be stored in the buffer memory 115 by the signal processing means 114 in step S209, the signal outputted from the signal amplifying means 113 is again fed to the buffer memory 115 and stored in the buffer memory 115 by the signal processing means 114 until the electric signal is completely stored in the buffer memory 115.

The retry controlling means 118 is then operated to judge whether or not the optical pickup 112 finishes reading the digital information at the final target address of the optical disc 111 in step S214. If the optical pickup 112 finishes reading the digital information at the final target address of the optical disc 111 in step S214, the retry controlling means 118 is operated to stop the retry routine. If, on the other hand, the optical pickup 112 has not finished reading the digital information at the final target address of the optical disc 111 in step S214, the process returns to the step S201.

As will be seen from the foregoing description, the error correction for the video and audio information recorded on the optical disc 111 is performed with the upper limit times to be changed based on the radial position of the optical pickup 112 by the sixth embodiment of the reproduction apparatus 170 according to the present invention. This makes it possible to continuously decode video and audio signals without being under the frozen state.

It will be understood by those skilled in the art that the foregoing description is in terms of preferred embodiments of the present invention wherein various changes and modification may be made without departing from the sprit and of the invention , as set forth in the appended claims.

## Claims

1. A reproduction apparatus for reproducing digital information recorded on an optical disc, comprising:
an optical pickup for reading said digital information recorded on said optical disc to have said digital information converted into electric signals, said digital information containing errors appearing when said digital information is read by said optical pickup;
signal amplifying means for amplifying said electric signals converted from said digital information read by said optical pickup;
signal processing means for processing said electric signals in one or more times of retry routines to correct said errors outputted as said electric signals from said signal amplifying means;
a buffer memory for storing said electric signals outputted from said signal processing means;
signal decoding means for decoding said electric signals stored in said buffer memory and outputted from said buffer memory;
pickup driving means for driving said optical pickup to move on said optical disc, said errors being associated with respective addresses to be targeted by said optical pickup when said optical pickup is moved by said pickup driving means;
information residue detecting means for detecting an amount of residue digital information remaining in said buffer memory; and
retry controlling means for controlling said one or more times of retry routines based on said amount of residue digital information detected by said information residue detecting means when said digital information fails to be read out of said optical disc.

2. A reproduction apparatus for reproducing digital information recorded on an optical disc, comprising:
an optical pickup for reading said digital information recorded on said optical disc to have said digital information converted into electric signals, said digital information containing errors appearing when said digital information is read by said optical pickup;
signal amplifying means for amplifying said electric signals converted from said digital information read by said optical pickup;
signal processing means for processing said electric signals in one or more times of retry routines to correct said errors outputted as said electric signals from said signal amplifying means;
a buffer memory for storing said electric signals outputted from said signal processing means;
signal decoding means for decoding said electric signals stored in said buffer memory and outputted from said buffer memory;
pickup driving means for driving said optical pickup to move on said optical disc, said errors being associated with respective addresses to be targeted by said optical pickup when said optical pickup is moved by said pickup driving means;
said electric signals are decoded by said signal decoding means for a time interval;
first time calculating means for calculating said time interval taken by said signal decoding means to discharge said electric signals decoded; and
retry controlling means for controlling said one or more times of retry routines based on said time interval calculated by said first time calculating means when said digital information fails to be read out of said optical disc.

3. A reproduction apparatus as set forth in claim 2, in which said buffer memory has at least two buffer memory sections consisting of an initial buffer memory section having said electric signals firstly stored at an initial time and a final buffer memory section having said electric signals finally stored at a final time; second time calculating means is for calculating the difference between said initial time and said final time for said electric signals to be stored in said initial and final buffer memory sections; and said retry controlling means is for controlling said one or more times of retry routines based on said difference between said initial time and said final time calculated by said second time calculating means.

4. A reproduction apparatus as set forth in claim 2 in which said digital information has a plurality of groups of picture unit recorded on said optical disc after being compressed under a specific format, each of said groups of picture unit being constituted by a plurality of pictures having a first picture, a last picture, and a plurality of intermediate pictures sequentially ordered between said first picture and said last picture; said electric signals are decoded by said signal decoding means and respectively indicative of said groups of picture unit; and said pickup driving means is for having said optical pickup skip said address for each of said groups of picture unit when said digital information fails to be read out of said optical disc.

5. A reproduction apparatus as set forth in claim 4, in which said digital information has a navigation pack and a plurality of groups of picture unit, said navigation pack including a data search information having respective first address, said digital information being recorded on said optical disc after being compressed under a specific format; and said retry controlling means is for controlling said one or more times of retry routines based on said data search information.

6. A reproduction apparatus as set forth in claim 4, in which said digital information has a video title set information and a plurality of groups of picture unit, said video title set information including a video title set time map having respective first address; and retry controlling means is for controlling said one or more times of retry routines based on said video title set time map.

7. A reproduction apparatus for reproducing digital information recorded on an optical disc, comprising:
an optical pickup for reading said digital information recorded on said optical disc to have said digital information converted into electric signals, said digital information containing errors appearing when said digital information is read by said optical pickup;
signal amplifying means for amplifying said electric signals converted from said digital information read by said optical pickup;
signal processing means for processing said electric signals in one or more times of retry routines to correct said errors outputted as said electric signals from said signal amplifying means;
a buffer memory for storing said electric signals outputted from said signal processing means;
signal decoding means for decoding said electric signals stored in said buffer memory and outputted from said buffer memory;
pickup driving means for driving said optical pickup to move on said optical disc, said errors being associated with respective addresses to be targeted by said optical pickup when said optical pickup is moved by said pickup driving means;
external damage detecting means for detecting external damages on the surface of said optical disc; and
retry controlling means for controlling said one or more times of retry routines based on said external damages detected by said external damage detecting means; said one or more times of retry routines being repeated by a first retry time at a first address with said external damages and by a second routine time at a second address without said external damages, said first time being smaller than said second time.

8. A reproduction apparatus as set forth in claim 7, which further comprises first external damage registration means for registering addresses with external damages of said optical disc; and registering addresses means for storing said addresses with damages registered by said retry controlling means.

9. A reproduction apparatus as set forth in claim 8, which further comprises second external damage registration means constituted by a nonvolatile memory adapted to hold said digital information after the reproducing apparatus is out of power.

10. A reproduction apparatus for reproducing digital information recorded on an optical disc, comprising:
an optical pickup is movable in the radial direction of said optical disc to assume radial positions to read said digital information converted into electric signals, said digital information containing errors appearing when said digital information is read by said optical pickup;
signal amplifying means for amplifying said electric signals converted from said digital information read by said optical pickup;
signal processing means for processing said electric signals in one or more times of retry routines to correct said errors outputted as said electric signals from said signal amplifying means;
a buffer memory for storing said electric signals outputted from said signal processing means;
signal decoding means for decoding said electric signals stored in said buffer memory and outputted from said buffer memory;
pickup driving means for driving said optical pickup to move on said optical disc, said errors being associated with respective addresses to be targeted by said optical pickup when said optical pickup is moved by said pickup driving means;
radial position detecting means for detecting said radial positions of said optical pickup; and
retry controlling means for controlling said one or more times of retry routines based on said radial position of said optical pickup detected by said radial position detecting means when said digital information fails to be read out of said optical disc.

11. A reproduction apparatus as set forth in claim 1, in which said electric signal has a newest address representative of a first section in said buffer memory and an oldest address representative of a second section in said buffer memory, said first section assuming a position spaced apart from said second section; and in which said buffer memory comprises a write pointer serving to indicate said newest address of said electric signal stored in said buffer memory, and a read pointer functioning to indicate said oldest address of said electric signal stored in said buffer memory.

12. A reproduction apparatus as set forth in claim 1, in which said retry controlling means has a retry counter indicative of said retry times and an upper limit times by which said retry routine is repeated.

13. A reproduction apparatus as set forth in claim 5, in which said retry controlling means is constituted by a reference counter indicative of said data search information and having a number referred by said retry controlling means to have said optical pickup move to said target address based on said first address of said data search information of said navigation pack.

14. A reproduction apparatus as set forth in claim 6, in which said retry controlling means has a reference counter indicative of said video title set map and having a number referred by said retry controlling means to have said optical pickup move to said target address based on said first address of said video title set map of said video title set information.

15. A reproduction method for reproducing digital information recorded on an optical disc, comprising the steps of:
a preparing step of preparing:
an optical pickup for reading said digital information recorded on said optical disc to have said digital information converted into electric signals, said digital information containing errors appearing when said digital information is read by said optical pickup;
signal amplifying means for amplifying said electric signals converted from said digital information read by said optical pickup;
signal processing means for processing said electric signals in one or more times of retry routines to correct said errors outputted as said electric signals from said signal amplifying means;
a buffer memory for storing said electric signals outputted from said signal processing means;
signal decoding means for decoding said electric signals stored in said buffer memory and outputted from said buffer memory;
pickup driving means for driving said optical pickup to move on said optical disc, said errors being associated with respective addresses to be targeted by said optical pickup when said optical pickup is moved by said pickup driving means;
information residue detecting means for detecting an amount of residue digital information remaining in said buffer memory;
retry controlling means for controlling said one or more times of retry routines based on said amount of residue digital information detected by said information residue means when said digital information fails to be read out of said optical disc; and
a retry controlling step of having said retry controlling means control said one or more times of retry routines based on said amount of residue digital information detected by said information residue detecting means when said digital information fails to be read out of said optical disc.

16. A reproduction method for reproducing digital information recorded on an optical disc, comprising the steps of:
a preparing step of preparing:
an optical pickup for reading said digital information recorded on said optical disc to have said digital information converted into electric signals, said digital information containing errors appearing when said digital information is read by said optical pickup;
signal amplifying means for amplifying said electric signals converted from said digital information read by said optical pickup;
signal processing means for processing said electric signals in one or more times of retry routines to correct said errors outputted as said electric signals from said signal amplifying means;
a buffer memory for storing said electric signals outputted from said signal processing means;
signal decoding means for decoding said electric signals stored in said buffer memory and outputted from said buffer memory;
pickup driving means for driving said optical pickup to move on said optical disc, said errors being associated with respective addresses to be targeted by said optical pickup when said optical pickup is moved by said pickup driving means;
said electric signals are decoded by said signal decoding means for a time interval;
time calculating means for calculating said time interval taken by said signal decoding means to discharge said electric signals decoded;
retry controlling means for controlling said one or more times of retry routine based on said time interval calculated by said time calculating means when said digital information fails to be read out of said optical disc; and
a retry controlling step of having said retry controlling means control said one or more times of retry routines based on said time interval calculated by said time calculating means when said digital information fails to be read out of said optical disc.

17. A reproduction method as set forth in claim 16, in which said buffer memory has at least two buffer memory sections consisting of an initial buffer memory section having said electric signals firstly stored at an initial time and a final buffer memory section having said electric signals finally stored at a final time; said time calculating means is for calculating the difference between said initial time and final time for said electric signals to be stored in said initial and final buffer memory sections; said retry controlling means is for controlling said one or more times of retry routines based on said difference between said initial time and final time calculated by said time calculating means; and said retry controlling step is of having said retry controlling means control said one or more times of retry routines based on said difference between said initial time and said final times calculated by said time calculating means.

18. A reproduction method as set forth in claim 16, in which said digital information has a plurality of groups of picture unit recorded on said optical disc after being compressed under a specific format, each of said groups of picture unit being constituted by a plurality of pictures having a first picture, a last picture, and a plurality of intermediate pictures sequentially ordered between said first picture and said last picture; said electric signals are indicative of said groups of picture unit; and said pickup driving means has said optical pickup skip said address for each of said groups of picture unit when said digital information fails to be read out of said optical disc; and which further comprises a pickup driving means controlling step of having said optical pickup skip said address associated with said groups of picture unit when said digital information at said address fails to be read out of said optical disc by said optical pickup.

19. A reproduction method as set forth in claim 18, in which said digital information has a navigation pack and a plurality of groups of picture unit, said navigation pack including a data search information having respective first address; said electric signals are indicative of said groups of picture unit; said pickup driving means has said optical pickup skip said address for each of said groups of picture unit when said digital information fails to be read out of said optical disc; and said retry controlling means is for having said retry controlling means control said one or more times of retry routines based on said data search information.

20. A reproduction method as set forth in claim 18, in which said digital information has a video title set information and a plurality of groups of picture unit, said video title set information including a video title set time map having respective first address; and said retry controlling means is for having said retry controlling means control said one or more times of retry routines based on said video title set time map.

21. A reproduction method for reproducing digital information recorded on an optical disc, comprising the steps of:
a preparing step of preparing:
an optical pickup for reading said digital information recorded on said optical disc to have said digital information converted into electric signals, said digital information containing errors appearing when said digital information is read by said optical pickup;
signal amplifying means for amplifying said electric signals converted from said digital information read by said optical pickup;
signal processing means for processing said electric signals in one or more times of retry routines to correct said errors outputted as said electric signals from said signal amplifying means;
a buffer memory for storing said electric signals outputted from said signal processing means;
signal decoding means for decoding said electric signals stored in said buffer memory and outputted from said buffer memory;
pickup driving means for driving said optical pickup to move on said optical disc, said errors being associated with respective addresses to be targeted by said optical pickup when said optical pickup is moved by said pickup driving means;
external damage detecting means for detecting external damages on the surface of said optical disc;
retry controlling means for controlling said one or more times of retry routines based on said external damages detected by said external damage detecting means; and
a retry controlling step of having said retry controlling means control said one or more times of retry routines based on said external damages detected by said external damage detecting means, said one or more times of retry routines being repeated by a first retry time at a first address with said external damages and by a second routine time at a second address without said external damages, said first time being smaller than said second time.

22. A reproduction method as set forth in claim 21, in which said preparing step is of further preparing external damage registration means for registering addresses with external damages of said optical disc; and a registering addresses memory for storing said addresses with damages being registered by said retry controlling means; and which further comprises; a registering addresses step of registering said addresses with damages of said optical disc by said retry controlling means.

23. A reproduction method as set forth in claim 22, in which said reproduction apparatus further comprises second external damage registration means constituted by a nonvolatile memory adapted to hold said digital information stored in said nonvolatile memory after the reproducing apparatus is out of power; and in which said registering addresses step is of registering in said registering addresses memory, said registering addresses being said addresses with said damages of said optical disc constituted by a nonvolatile memory adapted to hold said digital information after the reproducing apparatus is out of power.

24. A reproduction method for reproducing digital information recorded on an optical disc, comprising the steps of:
a preparing step of preparing:
an optical pickup is movable in the radial direction of said optical disc to assume radial positions to read said digital information converted into electric signals, said digital information containing errors appearing when said digital information is read by said optical pickup;
signal amplifying means for amplifying said electric signals converted from said digital information read by said optical pickup;
signal processing means for processing said electric signals in one or more times of retry routines to correct said errors outputted as said electric signals from said signal amplifying means;
a buffer memory for storing said electric signals outputted from said signal processing means;
signal decoding means for decoding said electric signals stored in said buffer memory and outputted from said buffer memory;
pickup driving means for driving said optical pickup to move on said optical disc, said errors being associated with respective addresses to be targeted by said optical pickup when said optical pickup is moved by said pickup driving means;
radial position detecting means for detecting said radial position of said optical pickup;
retry controlling means for controlling said one or more times of retry routines based on the radial position of said optical pickup detected by said radial position detecting means when said digital information fails to be read out of said optical disc; and
a retry controlling step of having said retry controlling means control said one or more times of retry routines based on said radial position of said optical pickup detected by said radial position detecting means when said digital information fails to be read out of said optical disc.
